# EUROPEAN PATENT APPLICATION

(11) **EP 4 578 648 A1**
(43) Date of publication of application: **02.07.2025**
(21) Application number: 23885778.3
(22) Date of filing: 31.10.2023
(51) Int. Cl.: B32B 27/32, B29C 48/08, B29C 48/21, B65D 65/40

(54) **COEXTRUDED MULTILAYER FILM, LAMINATE, AND PACKAGING BAG**

(30) Priority: 02.11.2022 JP 2022176669; 02.11.2022 JP 2022176673
(71) Applicant: Toppan Holdings Inc., Tokyo 110-0016 (JP)
(72) Inventor: EJIMA Yuki, Tokyo 110-0016 (JP); TAKEI Ryo, Tokyo 110-0016 (JP)
(74) Representative: Carstens, Dirk Wilhelm
(86) International application number: PCT/JP2023/039326
(87) International publication number: WO 2024/096024

(57) **Abstract**

A coextruded multilayer film according to one aspect of the present disclosure is a coextruded multilayer film including a first layer and a second layer, in which the second layer includes a polyethylene resin, the first layer includes a resin having a melting point higher than that of the polyethylene resin, and a thickness of the first layer is 0.3 µm or more and 6 µm or less.

## Description

### Technical Field

The present disclosure relates to a coextruded multilayer film, a laminate, and a packaging bag.

### Background Art

In a packaging bag, various materials are used in combination according to the nature of contents to be packaged, the amount of the contents, a post-treatment for preventing deterioration of the contents, a form of transporting the packaging bag, a method of opening the packaging bag, a method of discarding the packaging bag, and the like.

For example, in a packaging bag of a flexible package using a laminated film, a biaxially stretched film such as a polypropylene resin or a polyester resin is used in order to obtain the mechanical strength of the packaging bag, and a combination with a polyethylene resin, a polypropylene resin, an ethylene-vinyl acetate copolymer, or the like as a heat sealing material is used in order to seal the contents as the packaging bag. In addition, in order to suppress deterioration of the contents, an aluminum foil or an ethylene vinyl alcohol copolymer is also laminated.

The laminate using the various functionally separated materials described above is designed with emphasis on suitability in each process such as transportation, storage, and opening from the packaging of the contents. However, due to growing awareness of environmental problems in recent years, emphasis has been put on functions such as resource saving and recyclability of various products, and similar functions have been required for a laminate used for a packaging bag. In general, it is considered that when a ratio of a main resin included in a packaging material is 90 mass% or more, recyclability is high. However, a lot of conventional packaging materials include a plurality of resin materials and, in some cases, paper and a metal material, and do not satisfy this standard, and therefore, are not recycled at present.

Therefore, Patent Literature 1 describes that in a laminate including a base material, an adhesive layer, and a heat seal layer, the base material and the heat seal layer are formed of a polyethylene resin. When the base material and the heat seal layer are formed of the same material, the standard of recyclability is easily cleared.

### Citation List

### Patent Literature

Patent Literature 1: Japanese Unexamined Patent Publication No. 2020-55157

### Summary of Invention

### Technical Problem

However, when the laminate described in Patent Literature 1 is applied to a packaging bag, in a bag formation step of forming the packaging bag, there is a step of heat-welding (heat-sealing) the laminate by causing the heat seal layers (sealant layers) of the laminate to face each other and sandwiching the laminate by applying a pressure from an outer surface side of a base material layer of the laminate with a high-temperature jig. A jig of a heat sealing machine has a high temperature, and the outer surface of the base material layer in direct contact with the jig is exposed to a high temperature, and therefore, in the conventional laminate, the base material layer may be affected by heat or adhere to the jig, or the heat sealing portion may be wrinkled, and heat sealability is not sufficient. Therefore, there are problems such as narrow preferred conditions of a bag production temperature, poor productivity, and insufficient strength of the packaging bag.

The present disclosure provides a laminate having excellent recyclability and excellent heat sealability and a packaging bag using the same. In addition, the present disclosure provides a coextruded multilayer film by which a resulting laminate has excellent recyclability and excellent heat sealability when used as a material for a laminate.

### Solution to Problem

One aspect of the present disclosure relates to a coextruded multilayer film including a front layer and a back layer, in which the back layer includes a polyethylene resin, the front layer includes a resin having a melting point higher than that of the polyethylene resin, and a thickness of the front layer is 0.3 µm or more and 6 µm or less. When such a coextruded multilayer film is used as a material for a laminate, a resulting laminate has excellent recyclability and excellent heat sealability. In addition, since such a coextruded multilayer film can be produced in one step by a coextrusion method, production efficiency is excellent.

One aspect of the present disclosure relates to a coextruded multilayer film including a front layer, an intermediate layer, and a back layer, in which the intermediate layer includes a polyethylene resin, the front layer and the back layer include a resin having a melting point higher than that of the polyethylene resin, and a thickness of the front layer is 0.3 µm or more and 6 µm or less. Such a coextruded multilayer film is less likely to curl, and when used as a material for a laminate, a resulting laminate has excellent recyclability and excellent heat sealability. In addition, since such a coextruded multilayer film can be produced in one step by a coextrusion method, production efficiency is excellent.

Another aspect of the present disclosure relates to a laminate including the coextruded multilayer film, a first adhesive layer provided on the back layer of the coextruded multilayer film, and a sealant layer in this order, in which the sealant layer includes a polyethylene resin, and a content of the polyethylene resin in the laminate is 90 mass% or more based on a total amount of the laminate. Such a laminate has excellent recyclability and excellent heat sealability.

In one aspect, a difference between a heat-seal onset temperature of the front layer of the coextruded multilayer film and a heat-seal onset temperature of the sealant layer may be 40°C or higher. In one aspect, the laminate may further include a polyethylene film and a second adhesive layer formed between the first adhesive layer and the sealant layer from the first adhesive layer side. In one aspect, an absolute value of a molecular orientation degree of the polyethylene film may be less than 1.07.

In one aspect, the polyethylene film includes a front layer, an intermediate layer, and a back layer in this order, in the polyethylene film, a probe descending temperature of the intermediate layer is higher than a probe descending temperature of the front layer and is equal to or higher than a probe descending temperature of the back layer, and the front layer of the polyethylene film may include a polyethylene resin having a density of 0.926 g/cm³ or more.

In one aspect, the laminate may further include a gas barrier layer formed between the coextruded multilayer film and the polyethylene film. In one aspect, the laminate may further include a gas barrier layer formed between the polyethylene film and the sealant layer.

Still another aspect of the present disclosure relates to a packaging bag formed using the laminate. Such a packaging bag has excellent recyclability and excellent heat sealability.

### Advantageous Effects of Invention

According to the present disclosure, a laminate having excellent recyclability and excellent heat sealability and a packaging bag using the same are provided. In addition, according to the present disclosure, there is provided a coextruded multilayer film by which a resulting laminate has excellent recyclability and excellent heat sealability when used as a material for a laminate.

### Brief Description of Drawings

FIG. 1 is a schematic cross-sectional view of a coextruded multilayer film according to an embodiment of the present disclosure.
FIG. 2 is a schematic cross-sectional view of a coextruded multilayer film according to an embodiment of the present disclosure.
FIG. 3 is a schematic cross-sectional view of a laminate according to an embodiment of the present disclosure.
FIG. 4 is a schematic cross-sectional view of a laminate according to an embodiment of the present disclosure.
FIG. 5 is a schematic cross-sectional view of a laminate according to an embodiment of the present disclosure.
FIG. 6 is a schematic cross-sectional view of a coextruded multilayer film according to an embodiment of the present disclosure.
FIG. 7 is a schematic cross-sectional view of a laminate according to an embodiment of the present disclosure.
FIG. 8 is a schematic cross-sectional view of a laminate according to an embodiment of the present disclosure.
FIG. 9 is a schematic cross-sectional view of a laminate according to an embodiment of the present disclosure.

### Description of Embodiments

Hereinafter, embodiments of the present disclosure will be described in detail with reference to the drawings as the case may be. However, the present disclosure is not limited to the following embodiments.

### [Coextruded Multilayer Film According to First Aspect]

Hereinafter, a coextruded multilayer film according to a first aspect of the present disclosure will be described.

### <First Embodiment>

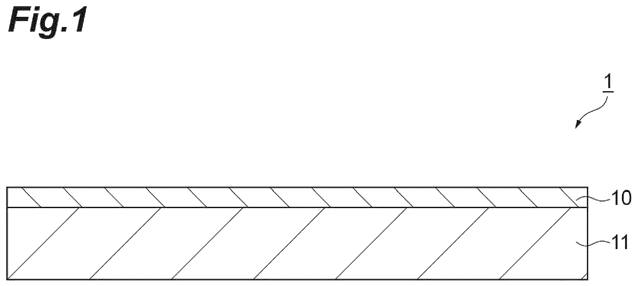

FIG. 1 is a schematic cross-sectional view of a coextruded multilayer film according to a first embodiment of the present disclosure. A coextruded multilayer film 1 illustrated in FIG. 1 includes a front layer (first layer) 10 and a back layer (second layer) 11. The coextruded multilayer film 1 is produced by a coextrusion method. A thickness of the front layer 10 is 0.3 µm or more and 6 µm or less. Hereinafter, each layer will be described.

### (Front Layer)

The front layer 10 includes a resin having a melting point higher than that of a polyethylene resin included in the back layer 11. The front layer 10 is provided to prevent a defect when heat-sealing is performed at the time of bag production or filling and sealing, and to ensure heat-sealing suitability. From such a role, the front layer 10 may be provided as the outermost layer of a laminate described below.

Examples of the resin having a melting point higher than that of the polyethylene resin include a polypropylene resin, a polyester resin, a polyamide resin, an ethylene vinyl alcohol copolymer, a polyvinyl alcohol resin, a polyvinylidene chloride resin, and a polystyrene resin. These resins may be used alone or in combination of two or more kinds thereof.

The melting point of the resin having a melting point higher than that of the polyethylene resin may be 160°C or higher, 180°C or higher, or 200°C or higher, from the viewpoint that the coextruded multilayer film 1 has further excellent heat sealability.

A content of the resin having a melting point higher than that of the polyethylene resin may be 10 mass% or more, 30 mass% or more, 50 mass% or more, 70 mass% or more, 90 mass% or more, 95 mass% or more, or 100 mass%, based on a total amount of the front layer 10.

When the coextruded multilayer film 1 is produced by a T-die method, a melt flow rate (MFR) of the resin having a melting point higher than that of the polyethylene resin is preferably 3 g/10 min or more and 20 g/10 min or less. When the MFR is 3 g/10 min or more, the processing suitability of the coextruded multilayer film 1 can be improved. In addition, when the MFR is 20 g/10 min or less, the produced coextruded multilayer film 1 can be prevented from being broken.

When the coextruded multilayer film 1 is produced by an inflation method, the MFR of the resin having a melting point higher than that of the polyethylene resin is preferably 0.1 g/10 min or more and 5 g/10 min or less. When the MFR is 0.1 g/10 min or more, the processing suitability of the coextruded multilayer film 1 can be improved. In addition, when the MFR is 5 g/10 min or less, the film formability can be improved.

The front layer 10 may include a polyethylene resin. When the front layer 10 includes a polyethylene resin, it is possible to impart adhesion strength that is hardly delaminated even without using an adhesive resin between the layers when the front layer 10 and a layer formed of a polyethylene resin are bonded to each other. A content ratio of the polyethylene resin may be 10 mass% or more, 30 mass% or more, 50 mass% or more, 70 mass% or more, or 90 mass% or more, based on the total amount of the front layer 10.

A thickness of the front layer 10 is 0.3 µm or more and 6 µm or less. When the thickness of the front layer 10 is 0.3 µm or more, the coextruded multilayer film 1 has excellent heat sealability. In addition, when the thickness of the front layer 10 is 6 µm or less, the coextruded multilayer film 1 has excellent recyclability. The thickness of the front layer 10 may be 0.5 µm or more or 1 µm or more, and may be 5 µm or less or 3 µm or less.

### (Back Layer)

The back layer includes a polyethylene resin. Examples of such a polyethylene resin include an ultra-low density polyethylene resin (abbreviation: VLDPE, density: less than 0.910 g/cm³), a low density polyethylene resin (abbreviation: LDPE, density: 0.910 g/cm³ or more and less than 0.930 g/cm³), a medium density polyethylene resin (abbreviation: MDPE, density: 0.930 g/cm³ or more and less than 0.942 g/cm³), a linear low density polyethylene resin (abbreviation: LLDPE, density: 0.930 g/cm³ or more and less than 0.942 g/cm³), and a high density polyethylene resin (abbreviation: HDPE, density: 0.942 g/cm³ or more).

A content of the polyethylene resin may be 10 mass% or more, 30 mass% or more, 50 mass% or more, 70 mass% or more, 90 mass% or more, 95 mass% or more, or 100 mass%, based on a total amount of the back layer.

The thickness of the coextruded multilayer film 1 is not particularly limited, and can be appropriately changed depending on the price and use while considering the suitability as a packaging material and the lamination suitability of other layers. The thickness of the coextruded multilayer film 1 is preferably 10 µm or more and 50 µm or less and more preferably 15 µm or more and 40 µm or less. When the thickness of the coextruded multilayer film is more than 15 µm, the stability of the production surface tends to be sufficiently secured. When the thickness of the coextruded multilayer film is more than 40 µm, the production cost tends to be suppressed.

The content ratio of the polyethylene resin in the coextruded multilayer film 1 may be 70 mass% or more, 80 mass% or more, or 90 mass% or more, based on a total amount of the coextruded multilayer film 1.

The coextruded multilayer film 1 can be produced by forming a material constituting each layer into a film by a coextrusion method such as a T-die method or an inflation method. The coextruded multilayer film 1 may be unstretched or may be subjected to a stretching treatment.

Various additives may be added to each layer of the coextruded multilayer film 1. Examples of such additives include a flame retardant, a slip agent, an antiblocking agent, an antioxidant, a light stabilizer, and a tackifier.

The front surface of the coextruded multilayer film 1 can be subjected to an easy adhesion treatment by a dry surface treatment such as a corona treatment or an atmospheric pressure plasma treatment.

### <Second Embodiment>

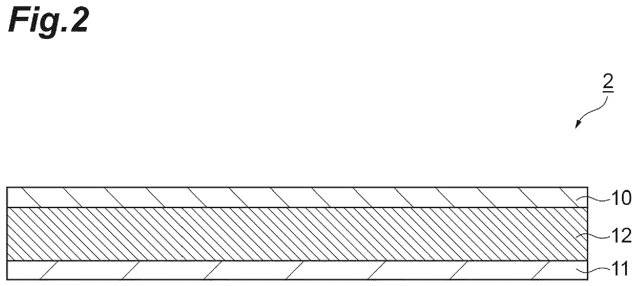

Hereinafter, a coextruded multilayer film according to a second embodiment will be described. A point not described below is the same as that of the coextruded multilayer film according to the first embodiment as long as inconsistency does not occur. FIG. 2 is a schematic cross-sectional view of the coextruded multilayer film according to the second embodiment of the present disclosure. A coextruded multilayer film 2 illustrated in FIG. 2 includes a front layer 10, an intermediate layer 12, and a back layer 11 in this order. Hereinafter, the intermediate layer will be described.

### (Intermediate Layer)

The intermediate layer 12 includes a polyethylene resin. Examples of such a polyethylene resin include an ultra-low density polyethylene resin, a low density polyethylene resin, a medium density polyethylene resin, a linear low density polyethylene resin, and a high density polyethylene resin. In addition, the intermediate layer 12 may be an adhesive resin such as maleic anhydride graft-modified polyethylene. The intermediate layer 12 may include a resin other than the polyethylene resin. The intermediate layer 12 may be a single layer or a plurality of layers.

A content of the polyethylene resin may be 10 mass% or more, 30 mass% or more, 50 mass% or more, 70 mass% or more, 90 mass% or more, 95 mass% or more, or 100 mass%, based on a total amount of the intermediate layer 12.

Although the coextruded multilayer films according to the first and second embodiments have been described above, the coextruded multilayer film according to the first aspect of the present disclosure is not limited to the above embodiments.

### [Laminate According to First Aspect]

Hereinafter, a laminate according to a first aspect of the present disclosure will be described.

### <First Embodiment>

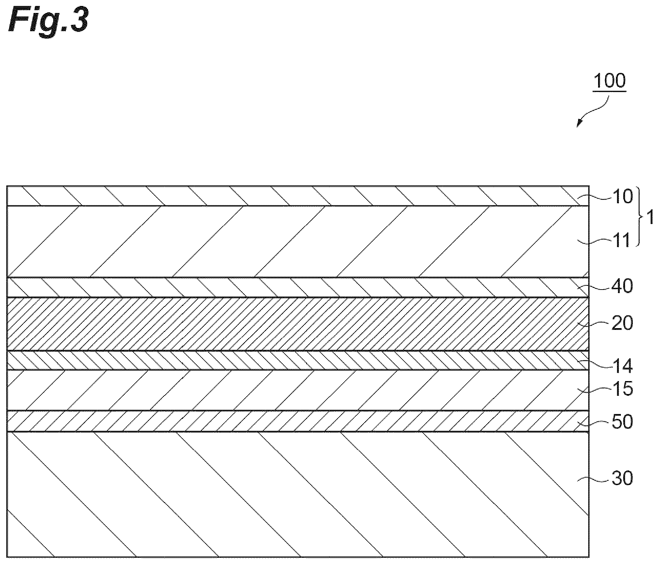

FIG. 3 is a schematic cross-sectional view of a laminate according to a first embodiment of the present disclosure. A laminate 100 illustrated in FIG. 3 includes a coextruded multilayer film 1, a first adhesive layer 40, a polyethylene film 20, a second adhesive layer 50, and a sealant layer 30. The laminate 100 includes an inorganic oxide layer 14 and a gas barrier coating layer 15 as gas barrier layers between the polyethylene film 20 and the sealant layer 30. Hereinafter, each layer will be described.

### (Polyethylene Film)

The polyethylene film 20 plays a role of improving processing stability when the inorganic oxide layer 14 is provided. In addition, the polyethylene film 20 plays a role of suppressing deterioration of gas barrier properties after a heat sterilization treatment. The polyethylene film 20 is a layer including a polyethylene resin. The polyethylene resin included in the polyethylene film 20 is not particularly limited, and from the viewpoint of excellent processing stability in providing the gas barrier layer and excellent heat resistance capable of maintaining the gas barrier properties even after the heat sterilization treatment, a high density polyethylene resin and a medium density polyethylene resin are preferable. These materials may be petroleum-derived materials, plant-derived materials, or mixtures thereof. A front surface of the polyethylene film 20 can be subjected to an easy adhesion treatment by a dry surface treatment such as a corona treatment or an atmospheric pressure plasma treatment.

A thickness of the polyethylene film 20 is not particularly limited, can be appropriately determined according to the price and use while considering the suitability as a packaging material and the lamination suitability of other layers, and is preferably 5 µm to 100 µm, more preferably 10 µm to 60 µm, and still more preferably 15 µm to 40 µm. When the thickness of the polyethylene film 20 is 5 µm or more, the laminate 100 has more excellent heat resistance, and the stability of the production surface tends to increase. When the thickness of the polyethylene film 20 is 100 µm or less, an increase in production cost can be suppressed.

The polyethylene film 20 can be produced by forming a film formed of a polyethylene resin by a co-extrusion method such as a T-die method or an inflation method. When the polyethylene film 20 is produced by a T-die method, a melt flow rate (MFR) of the polyethylene resin is preferably 3 g/10 min or more and 20 g/10 min or less. When the MFR is 3 g/10 min or more, the processing suitability of the laminate can be improved. In addition, when the MFR is 20 g/10 min or less, it is possible to prevent the produced film from being broken.

When the polyethylene film 20 is produced by an inflation method, the MFR of the polyethylene resin is preferably 0.1 g/10 min or more and 5 g/10 min or less. When the MFR is 0.1 g/10 min or more, the processing suitability of the laminate can be improved. In addition, when the MFR is 5 g/10 min or less, the film formability can be improved.

A content of the polyethylene resin may be 90 mass% or more, 95 mass% or more, or 100 mass%, based on a total amount of the polyethylene film 20.

The polyethylene film 20 may include various additives such as a flame retardant, a slip agent, an antiblocking agent, an antioxidant, a light stabilizer, and a tackifier. The polyethylene film 20 may have functions such as gas barrier properties, oxygen absorbency, high rigidity, and light shielding properties. Such a function may be appropriately changed according to the use of the laminate 100.

The polyethylene film 20 may be unstretched or may be subjected to a stretching treatment. The fact that the polyethylene film 20 is unstretched means that an absolute value of a molecular orientation degree of the polyethylene film 20 is less than 1.07. When the polyethylene film 20 is unstretched (the absolute value of the molecular orientation degree is less than 1.07), the inorganic oxide layer 14 is hardly peeled off, and the adhesion to the sealant layer 30 tends to be improved. The absolute value of the molecular orientation degree means a value measured by a method described in Examples described below.

### (Inorganic Oxide Layer)

In the laminate 100, the inorganic oxide layer 14 is formed on at least one surface of the polyethylene film 20. The inorganic oxide layer 14 imparts oxygen barrier properties and water vapor barrier properties to the laminate 100. Since the laminate 100 includes the inorganic oxide layer 14 and the gas barrier coating layer 15 between the polyethylene film 20 and the sealant layer 30, a tensile force applied to the gas barrier layer is reduced even when the laminate is bent by the contents when the laminate is formed into a packaging bag. As a result, the packaging bag has excellent gas barrier properties.

Examples of the configuration of the inorganic oxide layer 14 include a deposited layer formed of a metal oxide such as aluminum oxide, silicon oxide, magnesium oxide, or tin oxide. From the viewpoint of transparency and barrier properties, the metal oxide may be selected from the group consisting of aluminum oxide, silicon oxide, and magnesium oxide. Furthermore, in consideration of cost, the metal oxide is selected from aluminum oxide and silicon oxide. Furthermore, when the inorganic oxide layer 14 is formed as a barrier film formed of a metal oxide, high barrier properties can be obtained with a significantly thin layer in a range not affecting the recyclability of the laminate 100.

A thickness of the deposited layer formed of aluminum oxide is preferably 5 nm or more and 30 nm or less. When the film thickness is 5 nm or more, sufficient gas barrier properties can be obtained. In addition, when the film thickness is 30 nm or less, it is possible to suppress generation of cracks due to deformation of the thin film due to internal stress and to suppress deterioration of gas barrier properties. Note that, when the film thickness exceeds 30 nm, the cost tends to increase due to an increase in the amount of material used, an increase in the film formation time, and the like, which is not preferable from the economic viewpoint. From the same viewpoint as described above, the thickness of the deposited layer is more preferably 7 nm or more and 15 nm or less.

A thickness of the inorganic oxide layer formed of silicon oxide is preferably 5 nm or more and 100 nm or less. When the film thickness is 5 nm or more, sufficient gas barrier properties can be obtained. In addition, when the film thickness is 100 nm or less, even when an external load such as bending or pulling is applied after the inorganic oxide layer 21 is formed, it is possible to suppress generation of cracks in the inorganic oxide layer 21 and to suppress deterioration of gas barrier properties. Note that, when the film thickness exceeds 100 nm, the cost tends to increase due to an increase in the amount of material used, an increase in the film formation time, and the like, which is not preferable from the economic viewpoint. From the same viewpoint as described above, the thickness of the deposited layer is more preferably 10 nm or more and 50 nm or less.

The inorganic oxide layer 14 can be formed by, for example, vacuum film formation. In the vacuum film formation, a physical vapor deposition method or a chemical vapor deposition method can be used. Examples of the physical vapor deposition method include a vacuum vapor deposition method, a sputtering method, and an ion plating method, but are not limited thereto. Examples of the chemical vapor deposition method include a thermal CVD method, a plasma CVD method, and a photo CVD method, but are not limited thereto.

In the vacuum film formation, a resistance heating type vacuum vapor deposition method, an electron beam (EB) heating type vacuum vapor deposition method, an induction heating type vacuum vapor deposition method, a sputtering method, a reactive sputtering method, a dual magnetron sputtering method, a plasma chemical vapor deposition method (PECVD method), and the like are particularly preferably used. However, in consideration of productivity, the vacuum vapor deposition method is the most excellent at the present time. As heating means of the vacuum vapor deposition method, it is preferable to use any one of an electron beam heating method, a resistance heating method, and an induction heating method.

An undercoat layer may be formed on the surface of the polyethylene film 20 on the side where the inorganic oxide layer 14 is to be formed using a coating solution for forming a known undercoat layer. The undercoat layer can be formed of, for example, a coating solution including a resin such as an acrylic resin, an epoxy resin, an acrylic urethane resin, a polyester-based polyurethane resin, or a polyether-based polyurethane resin. The undercoat layer may be formed of a coating solution including an acrylic urethane resin or a polyester-based polyurethane resin from the viewpoint of heat resistance and interlayer adhesion strength.

A method for applying the coating solution for forming an undercoat layer may be a known coating method, and examples thereof include an immersion method (dipping method) and a method using a spray, a coater, a printing machine, a brush, or the like. In addition, examples of the coater and the printing machine used in these methods and application methods thereof include a gravure coater using a direct gravure method, a reverse gravure method, a kiss reverse gravure method, or an offset gravure method, a reverse roll coater, a micro gravure coater, a chamber doctor combination coater, an air knife coater, a dip coater, a bar coater, a comma coater, and a die coater.

A method for drying the undercoat layer is not particularly limited, and examples thereof include a method by natural drying, a method for drying in an oven set at a predetermined temperature, and a method using a drier attached to a coater, for example, an arch dryer, a floating dryer, a drum dryer, an infrared dryer, or the like. The drying conditions can be appropriately selected depending on the drying method, and for example, in the method for drying in an oven, drying may be performed at 60 to 100°C for about 1 second to 2 minutes.

A thickness of the undercoat layer is preferably 0.01 µm or more, 0.03 µm or more, or 0.05 µm or more, from the viewpoint of easily obtaining sufficient adhesion between the layers. The thickness of the undercoat layer is preferably 5 µm or less, 3 µm or less, or 2 µm or less, from the viewpoint of excellent gas barrier properties.

### (Gas Barrier Coating Layer)

The gas barrier coating layer 15 plays a role of improving the gas barrier properties and protecting the inorganic oxide layer 14. The gas barrier coating layer 15 is not particularly limited, may include a hydroxyl group-containing polymer compound, and specifically may be a thermally dried product of a composition including at least one of a hydroxyl group-including polymer compound and a hydrolysate thereof and at least one selected from the group consisting of a metal alkoxide, a silane coupling agent, and a hydrolysate thereof.

The gas barrier coating layer 15 can be formed using, for example, a composition (hereinafter, referred to as an overcoat agent) obtained by adding a hydroxyl group-containing polymer compound and a metal alkoxide and/or a silane coupling agent to water or a water/alcohol mixed solution. The overcoat agent can be prepared by, for example, mixing a solution obtained by dissolving a hydroxyl group-containing polymer compound, which is a water-soluble polymer, in an aqueous (water or water/alcohol mixed) solvent with a metal alkoxide and/or a silane coupling agent directly or a material subjected to a treatment such as hydrolysis of the metal alkoxide and/or the silane coupling agent in advance.

Examples of the hydroxyl group-containing polymer compound include polyvinyl alcohol, an ethylene-vinyl alcohol copolymer, polyvinyl pyrrolidone, starch, methyl cellulose, carboxymethyl cellulose, and sodium alginate. Among them, polyvinyl alcohol (PVA) is preferably used as an overcoat agent for the gas barrier coating layer because the gas barrier properties are particularly excellent.

Examples of the metal alkoxide include a compound represented by the following General Formula (I).

M(OR¹)ₘ(R²)ₙ₋ₘ ... (I)

In General Formula (I), R¹ and R² are each independently a monovalent organic group having 1 to 8 carbon atoms, and preferably an alkyl group such as a methyl group or an ethyl group. M represents an n-valent metal atom such as Si, Ti, Al, or Zr. m is an integer of 1 to n. When a plurality of R¹s or R²s are present, R¹s or R²s may be the same or different.

Specific examples of the metal alkoxide include tetraethoxysilane [Si(OC₂H₅)₄] and triisopropoxyaluminum [Al(O-2'-C₃H₇)₃]. Tetraethoxysilane and triisopropoxyaluminum are preferable because they are relatively stable in an aqueous solvent after hydrolysis.

Examples of the silane coupling agent include a compound represented by the following General Formula (II).

Si(OR¹¹)ₚ(R¹²)₃₋ₚR¹³ ... (II)

In General Formula (II), R¹¹ represents an alkyl group such as a methyl group or an ethyl group, R¹² represents a monovalent organic group such as an alkyl group, an aralkyl group, an aryl group, an alkenyl group, an alkyl group substituted with an acryloxy group, or an alkyl group substituted with a methacryloxy group, R¹³ represents a monovalent organic functional group, and p represents an integer of 1 to 3. When a plurality of R¹¹s or R¹²s are present, R¹¹s or R¹²s may be the same or different. Examples of the monovalent organic functional group represented by R¹³ include a glycidyloxy group, an epoxy group, a mercapto group, a hydroxyl group, an amino group, an alkyl group substituted with a halogen atom, and a monovalent organic functional group including an isocyanate group. The silane coupling agent may be a multimer such as a dimer or a trimer of the silane coupling agent described above.

Specific examples of the silane coupling agent include silane coupling agents such as vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, and γ-methacryloxypropylmethyldimethoxysilane.

When the water-soluble polymer is PVA, a content of PVA in the mixed solution may be 20 to 50 mass% or 25 to 40 mass% based on a total solid content of the mixed solution. When the content of PVA is 20 mass% or more, the gas barrier coating layer 15 is easily formed. When the content of PVA is 50 mass% or less, the laminate 100 tends to have excellent gas barrier properties.

To the overcoat agent, an isocyanate compound or a known additive such as a dispersant, a stabilizer, a viscosity modifier, or a colorant can be added as necessary as long as the gas barrier properties are not impaired.

The overcoat agent can be applied by, for example, a dipping method, a roll coating method, a gravure coating method, a reverse gravure coating method, an air knife coating method, a comma coating method, a die coating method, a screen printing method, a spray coating method, a gravure offset method, or the like. A coating film formed by applying the overcoat agent can be dried by, for example, a hot air drying method, a hot roll drying method, a high frequency irradiation method, an infrared irradiation method, a UV irradiation method, or a combination thereof.

The temperature for drying the coating film can be, for example, a temperature of 50 to 150°C, and is preferably a temperature of 60 to 100°C. When the temperature during drying is within the above range, generation of cracks in the inorganic oxide layer or the gas barrier coating layer can be further suppressed, and excellent barrier properties can be exhibited.

The gas barrier coating layer may be formed using an overcoat agent including a hydroxyl group-containing polymer compound (for example, a polyvinyl alcohol resin) and a silane compound. An acid catalyst, an alkali catalyst, a photo-heavy initiator, or the like may be added to the overcoat agent as necessary.

Examples of the silane compound include a silane coupling agent, polysilazane, and siloxane, and specific examples thereof include tetramethoxysilane, tetraethoxysilane, glycidoxypropyltrimethoxysilane, acryloxypropyltrimethoxysilane, and hexamethyldisilazane.

A thickness of the gas barrier coating layer is preferably 50 to 1,000 nm and more preferably 100 to 500 nm. When the thickness of the gas barrier coating layer is 50 nm or more, more sufficient gas barrier properties tend to be obtained, and when the thickness is 1,000 nm or less, sufficient flexibility tends to be maintained.

### (Sealant Layer)

The sealant layer 30 is formed of a polyethylene resin, and is bonded by thermal fusion (heat sealing) when a packaging material such as a packaging bag is formed using the laminate 100. The polyethylene resin constituting the sealant layer 30 is preferably a low density polyethylene resin, a linear low density polyethylene resin, or an ultra-low density polyethylene resin from the viewpoint of heat sealability. In addition, from the viewpoint of environmental load, a biomass-derived polyethylene resin or a recycled polyethylene resin is preferably used for the sealant layer 30. The sealant layer 30 may be composed of an unstretched polyethylene film. For the sealant layer 30, a copolymer of ethylene and other monomers can be used as long as the characteristics of the laminate 100 are not impaired.

A thickness of the sealant layer 30 can be appropriately changed according to the weight of the contents to be filled in the packaging material to be prepared, and the like. For example, when a packaging bag filled with 1 g or more and 200 g or less of contents is prepared, the thickness of the sealant layer 30 is preferably 20 µm or more and 60 µm or less. When the thickness is 20 µm or more, it is possible to prevent the filled contents from leaking due to breakage of the sealant layer 30. When the thickness is 60 µm or less, the processing suitability of the laminate 100 can be improved.

As another example, when a standing pouch filled with 50 g or more and 2,000 g or less of contents is prepared, the thickness of the sealant layer 30 is preferably 50 µm or more and 200 µm or less. When the thickness is 50 µm or more, it is possible to prevent the filled contents from leaking due to breakage of the sealant layer 30. In addition, when the thickness is 200 µm or less, the processing suitability of the laminate 100 can be improved, and the thickness is preferably 150 µm.

### (First and Second Adhesive Layers)

The first adhesive layer 40 is a layer including at least one adhesive, and is provided between the coextruded multilayer film 1 and the polyethylene film 20 to bond them together. The second adhesive layer 50 is a layer including at least one adhesive, and is provided between the polyethylene film 20 and the sealant layer 30 to bond them together. Any adhesive such as a one-liquid curable or two-liquid curable urethane-based adhesive can be used for the first adhesive layer 40 and the second adhesive layer 50. These adhesives may include a layered inorganic compound for the purpose of further enhancing the barrier properties.

The first adhesive layer 40 or the second adhesive layer 50 can also be formed using an adhesive capable of exhibiting gas barrier properties after curing. In particular, when an adhesive layer that is in contact with the inorganic oxide layer is formed of an adhesive that exhibits gas barrier properties, it is possible to further suppress a decrease in gas barrier properties due to generation of cracks in the inorganic oxide layer. Accordingly, the gas barrier performance of the laminate 100 can be further improved. Examples of such a gas barrier adhesive include an epoxy-based adhesive and a polyester-polyurethane-based adhesive. Specific examples thereof include "MAXIVE" manufactured by MITSUBISHI GAS CHEMICAL COMPANY, INC. and "Paslim" manufactured by DIC Corporation.

Thicknesses of the first adhesive layer 40 and the second adhesive layer 50 are preferably 0.5 µm or more and 6 µm or less, more preferably 0.8 µm or more and 5 µm or less, and still more preferably 1.0 µm or more and 4.5 µm or less. When the thicknesses of the first adhesive layer 40 and the second adhesive layer 50 are 0.5 µm or more, the adhesiveness between the first adhesive layer 40 and the second adhesive layer 50 can be improved. When the thicknesses of the first adhesive layer 40 and the second adhesive layer 50 are 6 µm or less, the processing suitability of the laminate 100 can be improved.

The first adhesive layer 40 and the second adhesive layer 50 can be formed by various known methods such as a direct gravure roll coating method, a gravure roll coating method, a kiss coating method, a reverse roll coating method, a Fontaine method, and a transfer roll coating method.

In the laminate 100, since the coextruded multilayer film 1, the polyethylene film 20, and the sealant layer 30 include a polyethylene resin, a content ratio of the polyethylene resin in the laminate 100 is 90 mass% or more based on the amount of the laminate 100. Thus, the laminate 100 has high recyclability. When the coextruded multilayer film 1, the polyethylene film 20, and the sealant layer 30 are all formed of only a polyethylene resin, the ratio (mass%) of the polyethylene resin in the laminate 100 can be calculated from the following Formula (1). (Mass of coextruded multilayer film 1 + mass of polyethylene film 20 + mass of sealant layer 30)/mass of entire laminate 100 × 100 ... (1)

In the laminate 100, a difference between a heat-seal onset temperature of the front layer 10 of the coextruded multilayer film 1 and a heat-seal onset temperature of the sealant layer 30 is preferably 40°C or higher because excellent sealability can be secured, and is more preferably 50°C or higher because a range of heat seal temperature condition during bag formation is widened and heat sealing at a high temperature becomes possible, such that the efficiency of bag formation can be improved. The difference between the heat-seal onset temperature of the front layer of the coextruded multilayer film and the heat-seal onset temperature of the sealant layer means a value measured by a method described in Examples described below.

In a state where one laminate 100 is bent with the sealant layers 30 facing each other, or two laminates 100 are stacked with the sealant layers 30 facing each other, the sealant layers 30 at the peripheral edge portion are joined by heat sealing while leaving a filled portion of the contents, such that a packaging bag including the laminate 100 can be formed. By performing the joining as described above while sandwiching the bent bottom film, a standing pouch can be formed. In addition, it can be used as various packaging bags such as pillow packaging, four-side sealing, three-side sealing, and a gusset bag. As described above, the laminate 100 can be applied to various packaging bags. The laminate 100 can be preferably used for a packaging bag for use in which a boiling treatment (for example, boiling temperature: 95°C or higher) is performed.

### <Second Embodiment>

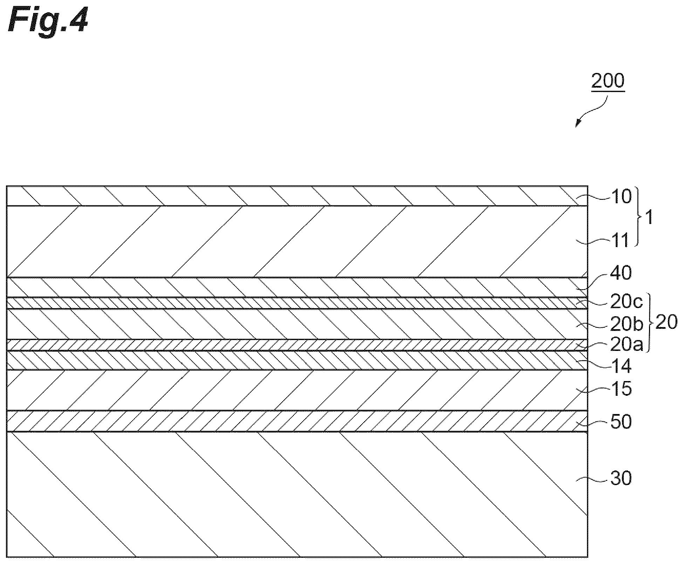

Hereinafter, a laminate according to a second embodiment will be described. A point not described below is the same as the laminate according to the first embodiment as long as inconsistency does not occur. FIG. 4 is a schematic cross-sectional view of the laminate according to the second embodiment of the present disclosure. A laminate 200 illustrated in FIG. 4 is different from the laminate 100 in that a polyethylene film 20 includes a front layer 20a, an intermediate layer 20b, and a back layer 20c in this order.

The front layer 20a preferably includes a polyethylene resin having a density of 0.926 g/cm³ or more, and preferably includes at least one selected from the group consisting of a medium density polyethylene resin and a high density polyethylene resin. The back layer 20c preferably includes at least one selected from the group consisting of a medium density polyethylene resin and a high density polyethylene resin. The intermediate layer 20b preferably includes a high density polyethylene resin. As a result, processing stability and heat resistance when the inorganic oxide layer 14 is provided can be improved while having the surface smoothness of the polyethylene film 20.

A density of the entire polyethylene film 20 is preferably 0.942 g/cm³ or more from the viewpoint of heat resistance.

A thickness of the intermediate layer 20b is preferably 1/3 or more of the entire polyethylene film 20 from the viewpoint of heat resistance.

In the polyethylene film 20, a probe descending temperature of the intermediate layer 20b is preferably higher than a probe descending temperature of the front layer 20a and equal to or higher than a probe descending temperature of the back layer 20c. As a result, a surface of the front layer 20a of the polyethylene film 20 is less likely to be rough, defects are less likely to occur when the inorganic oxide layer 14 is formed, and excellent heat resistance tends to be realized. As a result, the laminate 200 is less likely to be wrinkled, has excellent processing stability, and is more likely to maintain gas barrier properties even after a heat sterilization treatment.

The probe descending temperature is measured as follows. That is, when heating is performed by bringing a cantilever (probe) into contact with a surface of a polyethylene film (sample) fixed to a sample stage, applying a constant force (contact pressure) to the cantilever (probe) in a contact mode, and applying a voltage using an atomic force microscope including a nanothermal microscope including a cantilever (probe) having a heating mechanism, the sample surface thermally expands, and the cantilever (probe) rises. When the cantilever (probe) is further heated, the sample surface is softened and a large change in hardness is observed, and the cantilever (probe) descends and enters the sample surface. An abrupt change in displacement at this time is detected. The voltage change point is a probe descending start point, and the probe descending temperature is obtained by converting the voltage into a temperature.

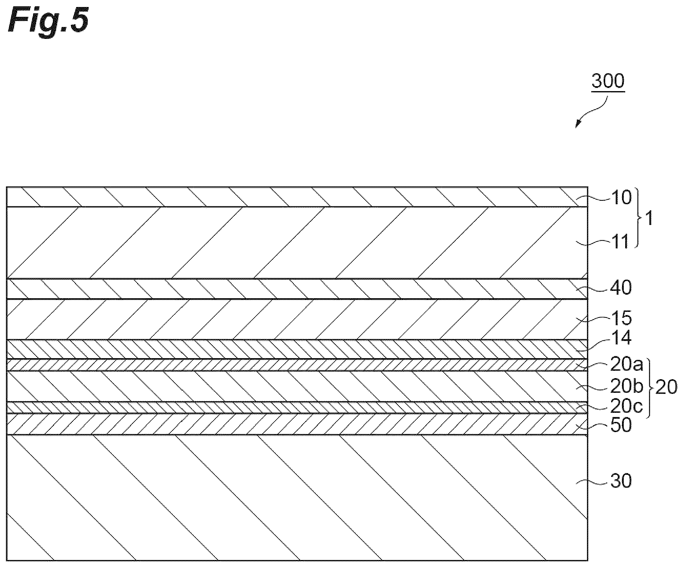

Although the laminates according to the first and second embodiments have been described above, the laminate according to the present disclosure is not limited to the above embodiments. For example, the laminate may include a coextruded multilayer film 2 instead of the coextruded multilayer film 1. The laminate may further include a printed layer. In addition, the laminate may not include one or more of a polyethylene film, an inorganic oxide layer, and a gas barrier coating layer. When the laminate does not include a polyethylene film, the first adhesive layer is not necessary, and the inorganic oxide layer may be provided on the coextruded multilayer film. In addition, the gas barrier layer may be provided between the coextruded multilayer film and the polyethylene film. In this case, the laminate may be as illustrated in FIG. 5.

A laminate 300 illustrated in FIG. 5 includes an inorganic oxide layer 14 and a gas barrier coating layer 15 between a coextruded multilayer film 1 and a polyethylene film 20. Therefore, the obtained packaging bag can suppress the influence of the contents on the gas barrier layer, and the gas barrier properties tend to be improved. The polyethylene film 20 is disposed so that a front layer 20a is formed on the inorganic oxide layer 14 and a back layer 20c is formed on a second adhesive layer 50.

### [Coextruded Multilayer Film According to Second Aspect]

Hereinafter, a difference between a coextruded multilayer film according to a second aspect of the present disclosure and the coextruded multilayer film according to the first aspect will be described.

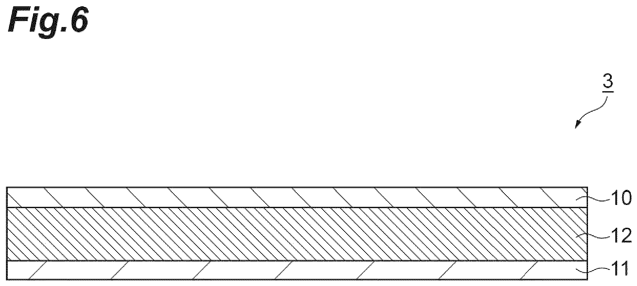

FIG. 6 is a schematic cross-sectional view of a coextruded multilayer film according to an embodiment of the present disclosure. A coextruded multilayer film 3 illustrated in FIG. 6 has a front layer (first layer) 10, an intermediate layer (second layer) 12, and a back layer (third layer) 11. The coextruded multilayer film 3 is produced by a coextrusion method. The intermediate layer 12 includes a polyethylene resin. A thickness of the front layer 10 is 0.3 µm or more and 6 µm or less. Hereinafter, each layer will be described.

### (Front Layer)

The front layer 10 includes a resin having a melting point higher than that of a polyethylene resin included in the intermediate layer 12. Other configurations of the front layer 10 can be similar to those of the front layer 10 of the coextruded multilayer film according to the first aspect described above.

### (Intermediate Layer)

The intermediate layer 12 can have the same configuration as that of the back layer 11 of the coextruded multilayer film according to the first aspect described above. The intermediate layer 12 may be a single layer or a plurality of layers.

### (Back Layer)

The back layer 11 includes a resin having a melting point higher than that of a polyethylene resin included in the intermediate layer 12. The back layer 11 plays a role of suppressing curling by reducing a difference in thermal characteristics between a surface on the front layer 10 and a surface on the back layer 11 in the coextruded multilayer film 3. In addition, the back layer 11 plays a role of imparting sufficient adhesion when the coextruded multilayer film 3 is bonded to another layer even when the coextruded multilayer film 3 is subjected to a stretching treatment.

Examples of the resin having a melting point higher than that of the polyethylene resin include a polypropylene resin, a polyester resin, a polyamide resin, an ethylene vinyl alcohol copolymer, a polyvinyl alcohol resin, a polyvinylidene chloride resin, and a polystyrene resin. These resins may be used alone or in combination of two or more kinds thereof.

The melting point of the resin having a melting point higher than that of the polyethylene resin may be 160°C or higher, 180°C or higher, or 200°C or higher, from the viewpoint that the coextruded multilayer film 3 has further excellent heat sealability.

A content of the resin having a melting point higher than that of the polyethylene resin may be 10 mass% or more, 30 mass% or more, 50 mass% or more, 70 mass% or more, 90 mass% or more, 95 mass% or more, or 100 mass%, based on a total amount of the back layer 11.

When the coextruded multilayer film 3 is produced by a T-die method, a melt flow rate (MFR) of the resin having a melting point higher than that of the polyethylene resin is preferably 3 g/10 min or more and 20 g/10 min or less. When the MFR is 3 g/10 min or more, the processing suitability of the coextruded multilayer film 3 can be improved. In addition, when the MFR is 20 g/10 min or less, the produced coextruded multilayer film 3 can be prevented from being broken.

When the coextruded multilayer film 3 is produced by an inflation method, the MFR of the resin having a melting point higher than that of the polyethylene resin is preferably 0.1 g/10 min or more and 5 g/10 min or less. When the MFR is 0.1 g/10 min or more, the processing suitability of the coextruded multilayer film 3 can be improved. In addition, when the MFR is 5 g/10 min or less, the film formability can be improved.

The back layer 11 may include a polyethylene resin. When the back layer 11 includes a polyethylene resin, it is possible to impart adhesion strength that is hardly delaminated even without using an adhesive resin between the layers when the back layer 11 and a layer formed of a polyethylene resin are bonded to each other. A content ratio of the polyethylene resin may be 10 mass% or more, 30 mass% or more, 50 mass% or more, 70 mass% or more, or 90 mass% or more based on the total amount of the back layer 11.

A thickness of the back layer 11 may be 0.3 µm or more, 0.5 µm or more, or 1 µm or more, and may be 6 µm or less, 5 µm or less, or 3 µm or less.

In the coextruded multilayer film 3, the generation of curl can be further suppressed by setting the thicknesses of the front layer 10 and the back layer 11 to be the same.

### [Laminate According to Second Aspect]

Hereinafter, a difference between the laminate according to the second aspect of the present disclosure and the laminate according to the first aspect will be described.

### <First Embodiment>

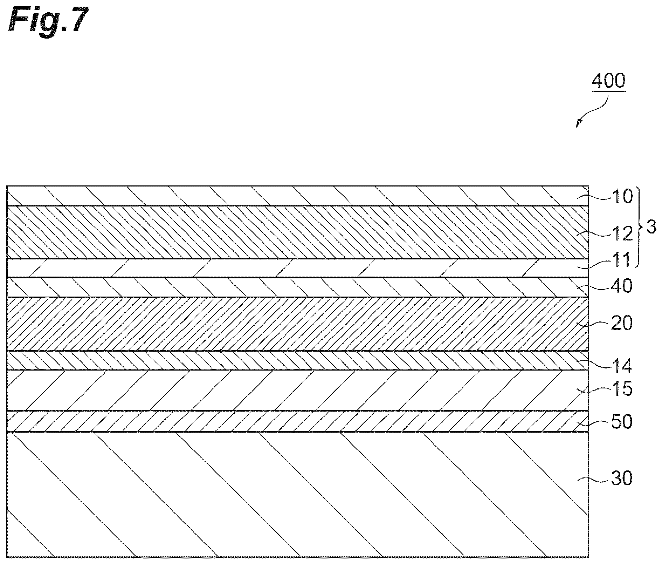

FIG. 7 is a schematic cross-sectional view of a laminate according to a first embodiment of the present disclosure. A laminate 400 illustrated in FIG. 7 includes a coextruded multilayer film 3, a first adhesive layer 40, a polyethylene film 20, a second adhesive layer 50, and a sealant layer 30. The laminate 400 includes an inorganic oxide layer 14 and a gas barrier coating layer 15 as gas barrier layers between the polyethylene film 20 and the sealant layer 30.

Each of the inorganic oxide layer, the gas barrier coating layer, the polyethylene film, the sealant layer, the first adhesive layer, and the second adhesive layer can have the same configuration as that of each of the inorganic oxide layer, the gas barrier coating layer, the polyethylene film, the sealant layer, the first adhesive layer, and the second adhesive layer of the laminate according to the first embodiment of the first aspect described above.

### <Second Embodiment>

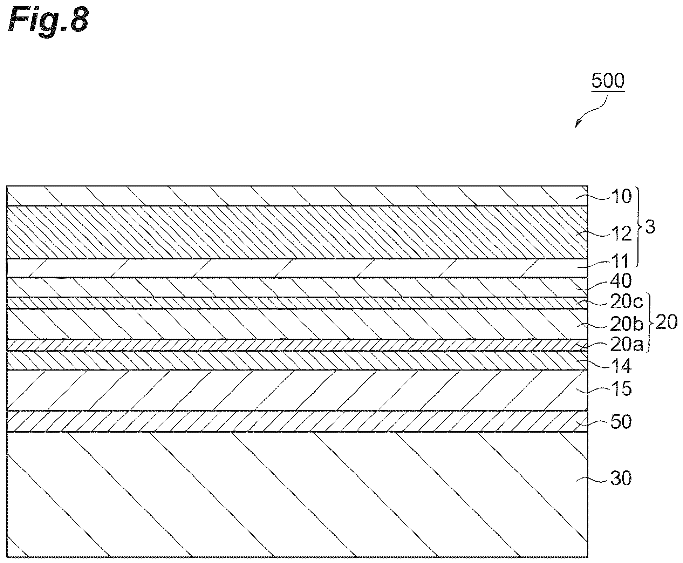

Hereinafter, a laminate according to a second embodiment of the second aspect will be described. A point not described below is the same as the laminate according to the first embodiment of the second aspect as long as inconsistency does not occur. FIG. 8 is a schematic cross-sectional view of the laminate according to the second embodiment of the present disclosure. A laminate 500 illustrated in FIG. 8 is different from the laminate 400 in that a polyethylene film 20 includes a front layer 20a, an intermediate layer 20b, and a back layer 20c in this order.

The polyethylene film 20 can have the same configuration as that of the polypropylene film of the laminate according to the second embodiment of the first aspect described above.

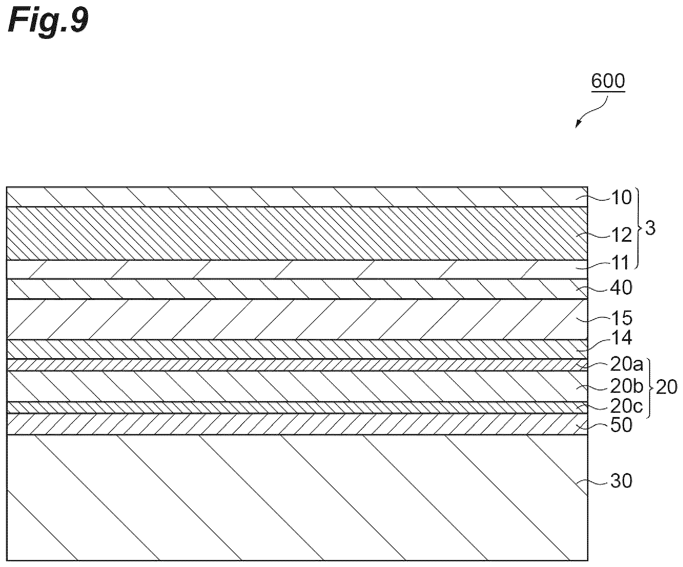

Although the laminates according to the first and second embodiments of the second aspect have been described above, the laminate according to the present disclosure is not limited to the above embodiments. For example, the laminate may further include a printed layer. In addition, the laminate may not include one or more of a polyethylene film, an inorganic oxide layer, and a gas barrier coating layer. When the laminate does not include a polyethylene film, the first adhesive layer is not necessary, and the inorganic oxide layer may be provided on the coextruded multilayer film. In addition, the gas barrier layer may be provided between the coextruded multilayer film and the polyethylene film. In this case, the laminate may be as illustrated in FIG. 9.

A laminate 600 illustrated in FIG. 9 includes an inorganic oxide layer 14 and a gas barrier coating layer 15 between a coextruded multilayer film 3 and a polyethylene film 20. Therefore, the obtained packaging bag can suppress the influence of the contents on the gas barrier layer, and the gas barrier properties tend to be improved. The polyethylene film 20 is disposed so that a front layer 20a is formed on the inorganic oxide layer 14 and a back layer 20c is formed on a second adhesive layer 50.

### Examples

Hereinafter, the present disclosure will be specifically described with reference to Examples, but the present disclosure is not limited to these Examples.

### {First Examination}

### [Material]

### (Preparation of Adhesive)

11 parts by mass of TAKENATE A52 manufactured by Mitsui Chemicals, Inc. and 84 parts by mass of ethyl acetate were mixed with 100 parts by mass of TAKELAC A525 manufactured by Mitsui Chemicals, Inc. to prepare an adhesive A as a urethane-based adhesive.

### (Preparation of Composition for Forming Undercoat Layer)

Acrylic polyol and tolylene diisocyanate were mixed so that the number of NCO groups of the tolylene diisocyanate was equal to the number of OH groups of the acrylic polyol, and the mixture was diluted with ethyl acetate so that a total solid content (a total amount of the acrylic polyol and the tolylene diisocyanate) was 5 mass%. To the diluted mixed solution, β-(3,4-epoxycyclohexyl)trimethoxysilane was further added in an amount of 5 parts by mass with respect to 100 parts by mass of the total amount of the acryl polyol and the tolylene diisocyanate, and these compounds were mixed to prepare a composition for forming an undercoat layer (anchor coating agent).

### (Preparation of Overcoat Agent)

An overcoat agent was prepared by mixing the following solution A, solution B, and solution C at a mass ratio of 70/20/10.
Solution A: Hydrolysis solution of 5 mass% (in terms of SiO₂) of solid content hydrolyzed by adding 72.1 g of 0.1 N hydrochloric acid to 17.9 g of tetraethoxysilane (Si(OC₂H₅)₄) and 10 g of methanol and performing stirring for 30 minutes
Solution B: 5 mass% of water/methanol solution of polyvinyl alcohol (mass ratio of water : methanol is 95 : 5)
Solution C: Hydrolysis solution obtained by diluting 1,3,5-tris(3-trialkoxysilylpropyl)isocyanurate to 5 mass% of solid content with mixed solution of water/isopropyl alcohol (mass ratio of water : isopropyl alcohol is 1 : 1)

### [Sealant Layer]

As materials for a sealant layer, "TUX MC-S"," TUX VCS", "TUX HC", and" TUX TC-S" (all of the above are products manufactured by Mitsui Chemicals Tohcello, Inc., polyethylene films) were prepared.

### [Resin Constituting Multilayer Film and Polyethylene Film]

The following materials were prepared as resins constituting a multilayer film and a polyethylene film.
PP (A): Polypropylene resin (melting point: 160°C, density: 0.9 g/cm³, MFR: 0.8 g/10 min (190°C, 2.16 kg)), manufactured by Japan Polypropylene Corporation, EG8B (trade name)
PA (A): Polyamide resin (melting point: 220°C, density: 1.15 g/cm³, relative viscosity: 3.04, manufactured by Ube Corporation, polyamide 6 1020 (trade name)
PBT (A): Polybutylene terephthalate resin (melting point: 215°C, density: 1.35 g/cm³, MFR: 4 g/10 min (190°C, 2.16 kg)), manufactured by Toray Industries, Inc., 1400S (trade name)
EVOH (A): Ethylene vinyl alcohol copolymer (melting point: 183°C, density: 1.19 g/cm³, MFR: 1.6 g/10 min (190°C, 2.16 kg)), manufactured by Kuraray Co., Ltd., F171B (trade name)
PE (A): Polyethylene resin (melting point: 133°C, density: 0.958 g/cm³, MFR: 1 g/10 min (190°C, 2.16 kg)), manufactured by Prime Polymer Co., Ltd., 3600F (trade name)
PE (B): Polyethylene resin (melting point: 130°C, density: 0.95 g/cm³, MFR: 1.1 g/10 min (190°C, 2.16 kg)), manufactured by Prime Polymer Co., Ltd., 3300F (trade name)
PE (C): Polyethylene resin (melting point: 133°C, density: 0.963 g/cm³, MFR: 1.35 g/10 min (190°C, 2.16 kg)), manufactured by Asahi Kasei Corporation, B161 (trade name)
PE (D): Polyethylene resin (melting point: 129°C, density: 0.941 g/cm³, MFR: 1.3 g/10 min (190°C, 2.16 kg)), manufactured by The Dow Chemical Company, 5538G (trade name)
PE (E): Polyethylene resin (melting point: 134°C, density: 0.962 g/cm³, MFR: 0.85 g/10 min (190°C, 2.16 kg)), manufactured by The Dow Chemical Company, 5960G1 (trade name)
PE (F): Polyethylene resin (melting point: 124°C, density: 0.92 g/cm³, MFR: 0.85 g/10 min (190°C, 2.16 kg)), manufactured by The Dow Chemical Company, 5100G (trade name)
Adhesive resin (A): Adhesive resin (melting point: 119°C, density: 0.9 g/cm³, MFR: 1 g/10 min (190°C, 2.16 kg)), manufactured by The Dow Chemical Company, M512 (trade name)

### [Production of Coextruded Multilayer Film]

### <Examples A1-1 to A1-14, Examples A2-1 to A2-11, and Comparative Examples A1-1 to A1-3>

A coextruded multilayer film was produced by a coextrusion air cooling inflation method. Specifically, first, extruders 1 to 5 were prepared. Each extruder was filled with the materials shown in Tables 1 to 5, 7, and 9, respectively. When the two materials were mixed and used, the names of the materials and the mixing ratios (mass ratios) thereof are shown in the tables. The filled material was melt-kneaded (temperature: 190 to 230°C). Molten materials were extruded from each extruder, laminated, and air-cooled to produce a coextruded multilayer film. The material for each extruder was extruded so that the thickness was the value shown in Tables 1 to 5, 7, and 9.

### [Production of Polyethylene Film]

### <Examples A2-1 to A2-11>

A coextruded multilayer film was produced by a coextrusion air cooling inflation method. Specifically, first, extruders 1 to 3 were prepared. Each extruder was filled with the materials shown in Tables 5 and 7, respectively. The filled material was melt-kneaded (temperature: 190 to 230°C). Molten materials were extruded from each extruder, laminated, and air-cooled to obtain a polyethylene film. A surface of the obtained polyethylene film was subjected to a corona treatment. The polyethylene film of Example A2-7 was subjected to a stretching treatment at a magnification of 2 to 5 in an MD direction.

### [Production of Laminate]

### <Examples A1-1 to A1-14 and Comparative Examples A1-1 to A1-3>

A surface on a back layer of the coextruded multilayer film and a sealant layer were bonded by a dry lamination method using an adhesive A and aged (temperature: 40°C, duration: 4 days) to obtain a laminate. A thickness of the adhesive layer was 3 µm. For the sealant layer, the materials shown in Tables 1 to 4 and 9 were used.

### <Examples A2-1 to A2-11>

### (Formation of Undercoat Layer)

A composition for forming an undercoat layer was applied to the corona-treated front layer of the polyethylene film by a gravure coating method to form a coating film, and the coating film was dried to form an undercoat layer having a thickness of 0.1 µm.

### (Formation of Inorganic Oxide Layer)

A transparent inorganic oxide layer formed of silicon oxide or aluminum oxide and having a thickness of 30 nm was formed on the undercoat layer by a vacuum vapor deposition apparatus by an electron beam heating method.

### (Formation of Gas Barrier Coating Layer)

An overcoat agent was applied onto the inorganic oxide layer by a gravure coating method to form a coating film, and the coating film was dried to form a 0.3 µm-thick gas barrier coating layer having a gas barrier function.

A surface of the polyethylene film on the gas barrier coating layer side and the sealant layer were bonded by a dry lamination method using an adhesive A to obtain a first laminate. A surface on the back layer of the coextruded multilayer film of the first laminate and a surface on the back layer of the polyethylene film were bonded by a dry lamination method using an adhesive A to obtain a second laminate. The second laminate was aged (temperature: 40°C, duration: 4 days) to obtain a laminate. A thickness of each adhesive layer was 3 µm. For the sealant layer, the materials shown in Tables 5 and 7 were used.

### [Evaluation of Laminate]

The laminate obtained in each example was evaluated as follows. The results are shown in Tables 1 to 4, 6, 8, and 9.

### <Recyclability>

A content ratio (mass%) of the polyethylene resin in the laminate of each example was calculated. The content ratio of the polyethylene resin was evaluated according to the following criteria.

### (Reference)

A: The content ratio of the polyethylene resin is 90 mass% or more.
C: The content ratio of the polyethylene resin is less than 90 mass%.

### <Heat Sealability>

Each laminate was cut into a 10 cm square to prepare a sample for evaluation. The sample was valley folded when viewed from the sealant layer side, and heat-sealed (pressure: 0.2 MPa, heating time: 1 second) using a heat seal tester. Thereafter, the presence or absence of fusion of the laminate to a heat seal bar was visually confirmed. In addition, the presence or absence of fusion of the sealant layer of the sample was confirmed. The operation was performed at various heat seal temperatures, and the highest temperature (maximum temperature) and the lowest temperature (minimum temperature) among the temperatures at which the sealant layers of the sample were fused to each other and the fusion of the laminate to the heat seal bar was not confirmed were measured. A difference between the maximum temperature and the minimum temperature (a range of heat seal temperature condition) was calculated and evaluated according to the following criteria. In addition, the appearance of the heat-sealed portion of the sample obtained by heat-sealing at a heat seal temperature of 140°C was visually confirmed and evaluated according to the following criteria.

### (Criteria for Evaluation of Range of Heat Seal Temperature Condition)

A: The range of heat seal temperature condition is 20°C or higher.
B: The range of heat seal temperature condition is 0°C or higher and lower than 20°C.

### (Standard of Appearance)

A: No wrinkle was observed in the heat-sealed portion.
B: Wrinkles are observed in the heat-sealed portion to a degree that the product can be used.
C: Wrinkles are observed in the heat-sealed portion to a degree that the product cannot be used.

### <Heat-Seal Onset Temperature>

The front layers of the coextruded multilayer films in the laminates obtained in the respective examples were placed to face to each other, and heat-sealed under conditions of a seal pressure of 0.2 MPa, a seal time of 1 second, and a seal width of 5 mm using a heat sealer manufactured by TESTER SANGYO CO., LTD. The seal temperature was adjusted between 130°C and 240°C in increments of 10°C. Thereafter, the film heat-sealed at each temperature was cut into 15 mm in width × 80 mm, T-shaped peeling was performed at a tensile speed of 300 mm/min using a tensile tester manufactured by Shimadzu Corporation, and the heat-sealing strength of the heat-sealed portion was measured. A temperature at which the heat-seal strength reached 2 N/15 mm or more was defined as a heat-seal onset temperature of the front layer of the multilayer film. For the sealant layer of the laminate obtained in each example, a heat-seal onset temperature was also measured in the same manner as for the front layer of the multilayer film. In addition, a difference between the onset temperature of the front layer of the multilayer film and the onset temperature of the sealant layer was calculated.

### <Barrier Processing Suitability>

The appearance and winding form of the laminate obtained in each example were visually confirmed and determined according to the following criteria.

### (Reference)

A: No wrinkle was observed in the appearance of the gas barrier film.
B: Slight wrinkles were observed in the appearance of the gas barrier film.
C: A large number of wrinkles were observed in the appearance of the gas barrier film.

### <Gas Barrier Properties>

### (Without Boiling)

An oxygen permeability (unit: cc/m²·day·atm) of the laminate was measured according to JIS K 7126-2 under conditions of a temperature of 30°C and a relative humidity of 70%, and evaluated according to the following criteria.

### (Reference)

A: The oxygen permeability is less than 2 cc/m²·day·atm.
B: The oxygen permeability is 2 cc/m²·day·atm or more and less than 10 cc/m²·day·atm.
C: The oxygen permeability is 10 cc/m²·day·atm or more.

### (With Boiling)

The laminate was cut into a size of 15 cm × 10 cm, and the cut two packaging films were superimposed on each other so that the sealant layers faced each other, and subjected to 3-way impulse sealing in a pouch shape. 200 ml of tap water was put in the pouch as a content, and the remaining one side was impulse-sealed to prepare a 4-side sealed pouch (packaging bag). The obtained pouch was subjected to a boiling treatment at 95°C for 30 minutes by a boiling treatment apparatus. After boiling, the pouch was opened, the tap water in the pouch was discarded, and the pouch was sufficiently dried. The laminate was cut out from the pouch, and the oxygen permeability was measured in the same manner as in the evaluation of the gas barrier properties without boiling. The oxygen permeability was evaluated according to the following criteria.

### (Reference)

A: The oxygen permeability is less than 2 cc/m²·day·atm.
B: The oxygen permeability is 2 cc/m²·day·atm or more and less than 10 cc/m²·day·atm.
C: The oxygen permeability is 10 cc/m²·day·atm or more.
D: The sealant layers were fused to each other, and the oxygen permeability was not measured.

### <Molecular Orientation Degree>

A molecular orientation degree of the molecular chain in the plane of the polyethylene film was measured by rotating the polyethylene film in a microwave polarization electric field using a microwave molecular orientation meter (Oji Scientific Instruments Co., Ltd., trade name MOA-5012A).

### <Probe Descending Temperature>

MPF-3D-SA (trade name) manufactured by Oxford Instruments plc was used as an atomic force microscope, and Ztherm (trade name) manufactured by Oxford Instruments plc was used as a nanothermal microscope provided for the microscope equipped therewith. As a cantilever (probe), AN2-200 (trade name) manufactured by Anasis Instruments Corporation was used.

The polyethylene film of each example was cut out from an arbitrary location, and a cross-sectional sample was prepared at -140°C with a cryomicrotome. As conditions for preparing the cross-sectional sample, a diamond knife was used with a cutting thickness of 100 nm and a speed of 1 mm/s.

After measuring the shape of the sample with a field of view of 10 µm in an AC mode, the cantilever (probe) was separated from the sample by 5 to 10 µm in a Z direction. In this state, the Detrend correction function of the apparatus was performed under conditions of a maximum applied voltage of 6 V and a heating rate of 0.5 V/s in a contact mode, and a change in deflection of the cantilever (probe) due to the voltage application was corrected. Thereafter, the cantilever was brought into contact with the sample so that the change in deflection before and after contact between the cantilever and the sample was 0.2 V in the contact mode, and a voltage was applied to the cantilever under the conditions of a maximum applied voltage of 6 V and a heating rate of 0.5 V/s to heat the sample while maintaining a constant value of deflection. The change in the Z displacement at this time was recorded, and the measurement was stopped when the Z displacement turned from increasing to decreasing and then decreased by 50 nm from the change point. When the Z displacement did not decrease by 50 nm from the change point and reached the maximum applied voltage, the maximum applied voltages at the time of Detrend correction and at the time of measurement were increased by 0.5 V, and the measurement was performed again. The recorded applied voltage with the maximum Z displacement was converted into a temperature to obtain a probe descending temperature. The measurement was performed at 10 points within a 10 µm field, and the average value was used. The order of the probe descending temperatures of the front layer, the intermediate layer, and the back layer is shown in the table.

In order to convert the applied voltage to a temperature, polycaprolactone (melting point: 60°C), a low density polyethylene resin (112°C), a polypropylene resin (166°C), and a polyethylene terephthalate resin (255°C) were measured as calibration samples, and a calibration curve of the applied voltage and the temperature was created. Here, the melting point is a melting peak temperature measured by a differential scanning calorimeter (DSC) under a condition of a temperature raising rate of 5 °C/min. The measurement method was the same as the measurement of the sample, but the maximum applied voltages at the time of Detrend correction and at the time of measurement were 3.5 V for polycaprolactone, 5.5 V for the low density polyethylene resin, 6.5 V for polypropylene, and 7.8 V for the polyethylene terephthalate resin. A relationship between the melting point and the applied voltage at which the Z displacement was maximum when each calibration sample was measured was approximated by a cubic function using a least squares method to create a calibration curve, and the applied voltage when the sample was measured was converted into a temperature.

### <Adhesion Strength>

A strip-shaped test piece having a width of 15 mm was cut out from the laminate obtained in each of Examples and Comparative Examples. Using a Tensilon universal tester RTC-1250 manufactured by ORIENTEC CO., LTD., the coextruded multilayer film and the sealant layer were peeled off from the end of the test piece, and the adhesion strength between the layers was measured. The measurement was performed under conditions of T-shaped peeling and a peeling rate of 300 mm/min in a normal state (temperature: 23°C, humidity: 50%RH). In addition, the peeling was performed under a condition of a peeling rate of 300 mm/min in a wet state (temperature: 23°C, humidity: 50%RH) in which the peeling interface was peeled while being wetted with water. The results were evaluated according to the following criteria.

### (Normal State Criteria)

A: The adhesion strength is 2 N/15 mm or more.
B: The adhesion strength is less than 2 N/15 mm.

### (Wet State Criteria)

A: The adhesion strength is 2 N/15 mm or more.
B: The adhesion strength is less than 2 N/15 mm.

**[Table 1]**

| | | | | | Example A1-1 | Example A1-2 | Example A1-3 | Example A1-4 |
|---|---|---|---|---|---|---|---|---|
| Material | Multilayer film | | Extruder 1 | Front layer | PP (A) | PBT (A) | PA (A) | EVOH (A) |
| | | | Extruder 2 | First intermediate layer | Adhesive resin A | Adhesive resin A | Adhesive resin A | Adhesive resin A |
| | | | Extruder 3 | Second intermediate layer | PE (A) | PE (A) | PE (A) | PE (A) |
| | | | Extruder 4 | Third intermediate layer | Adhesive resin A | Adhesive resin A | Adhesive resin A | Adhesive resin A |
| | | | Extruder 5 | Back layer | PE (A) | PE (A) | PE (A) | PE (A) |
| | Sealant layer | | | | TUX MC-S | TUX MC-S | TUX MC-S | TUX MC-S |
| Thickness (µm) | Multilayer film | | Extruder 1 | Front layer | 2 | 2 | 2 | 2 |
| | | | Extruder 2 | First intermediate layer | 1 | 1 | 1 | 1 |
| | | | Extruder 3 | Second intermediate layer | 24 | 24 | 24 | 24 |
| | | | Extruder 4 | Third intermediate layer | 1 | 1 | 1 | 1 |
| | | | Extruder 5 | Back layer | 2 | 2 | 2 | 2 |
| | Sealant layer | | | | 60 | 60 | 60 | 60 |
| Heat-seal onset temperature (°C) | | | | Front layer of multilayer film | 160 | 230 | 220 | 190 |
| | | | | Sealant layer | 110 | 110 | 110 | 110 |
| | | | | Temperature difference | 50 | 120 | 110 | 80 |
| PE content in laminate (mass%) | | | | | 92.8 | 91.8 | 92.2 | 90.8 |
| Recyclability | | | | | A | A | A | A |
| Heat sealability | | Maximum temperature (°C) | | | 150 | > 200 | 200 | 170 |
| | | Minimum temperature (°C) | | | 130 | 130 | 130 | 130 |
| | | Range of heat seal temperature condition | | | A | A | A | A |
| | | Appearance | | | A | A | A | A |

**[Table 2]**

| | | | | | Example A1-5 | Example A1-6 |
|---|---|---|---|---|---|---|
| Material | Multilayer film | | Extruder 1 | Front layer | PP (A) | PBT (A) |
| | | | Extruder 2 | Intermediate layer | Adhesive resin A | Adhesive resin A |
| | | | Extruder 3 | Back layer | PE (A) | PE (A) |
| | | | Extruder 4 | | PE (A) | PE (A) |
| | | | Extruder 5 | | PE (A) | PE (A) |
| | Sealant layer | | | | TUX MC-S | TUX MC-S |
| Thickness (µm) | Multilayer film | | Extruder 1 | Front layer | 2 | 2 |
| | | | Extruder 2 | Intermediate layer | 1 | 1 |
| | | | Extruder 3 | Back layer | 24 | 24 |
| | | | Extruder 4 | | 1 | 1 |
| | | | Extruder 5 | | 2 | 2 |
| | Sealant layer | | | | 60 | 60 |
| Heat-seal onset temperature (°C) | | | | Front layer of multilayer film | 160 | 220 |
| | | | | Sealant layer | 110 | 110 |
| | | | | Temperature difference | 50 | 110 |
| PE content in laminate (mass%) | | | | | 90.8 | 91.9 |
| Recyclability | | | | | A | A |
| Heat sealability | | Maximum temperature (°C) | | | 150 | 200 |
| | | Minimum temperature (°C) | | | 130 | 130 |
| | | Range of heat seal temperature condition | | | A | A |
| | | Appearance | | | A | A |

**[Table 3]**

| | | | | | Example A1-7 | Example A1-8 | Example A1-9 | Example A1-10 |
|---|---|---|---|---|---|---|---|---|
| Material | Multilayer film | | Extruder 1 | Front layer | PP (A) | PE (A):PP (A) = 90:10 | PE (A):PP (A) = 90: 10 | PA (A):PE (A) = 90:10 |
| | | | Extruder 2 | Back layer | PE (A) | PE (A) | PE (A) | PE (A) |
| | | | Extruder 3 | | PE (A) | PE (A) | PE (A) | PE (A) |
| | | | Extruder 4 | | PE (A) | PE (A) | PE (A) | PE (A) |
| | | | Extruder 5 | | PE (A) | PE (A) | PE (A) | PE (A) |
| | Sealant layer | | | | TUX MC-S | TUX MC-S | TUX VCS | TUX MC-S |
| Thickness (µm) | Multilayer film | | Extruder 1 | Front layer | 2 | 2 | 2 | 2 |
| | | | Extruder 2 | Back layer | 1 | 1 | 1 | 1 |
| | | | Extruder 3 | | 24 | 24 | 24 | 24 |
| | | | Extruder 4 | | 1 | 1 | 1 | 1 |
| | | | Extruder 5 | | 2 | 2 | 2 | 2 |
| | Sealant layer | | | | 60 | 60 | 60 | 60 |
| Heat-seal onset temperature (°C) | | | | Front layer of multilayer film | 160 | 140 | 140 | 200 |
| | | | | Sealant layer | 110 | 110 | 90 | 110 |
| | | | | Temperature difference | 50 | 30 | 50 | 90 |
| PE content in laminate (mass%) | | | | | 93.5 | 95.3 | 95.3 | 93.2 |
| Recyclability | | | | | A | A | A | A |
| Heat sealability | | Maximum temperature (°C) | | | 150 | 130 | 130 | 190 |
| | | Minimum temperature (°C) | | | 130 | 130 | 110 | 130 |
| | | Range of heat seal temperature condition | | | A | B | A | A |
| | | Appearance | | | A | A | A | A |

**[Table 4]**

| | | | | | Example A1-11 | Example A1-12 | Example A1-13 | Example A1-14 |
|---|---|---|---|---|---|---|---|---|
| Material | Multilayer film | | Extruder 1 | Front layer | PP (A) | PA (A) | PP (A) | PA (A) |
| | | | Extruder 2 | First intermediate layer | Adhesive resin A | Adhesive resin A | Adhesive resin A | Adhesive resin A |
| | | | Extruder 3 | Second intermediate layer | PE (A) | PE (A) | PE (A) | PE (A) |
| | | | Extruder 4 | Third intermediate layer | Adhesive resin A | Adhesive resin A | Adhesive resin A | Adhesive resin A |
| | | | Extruder 5 | Back layer | PE (A) | PE (A) | PE (A) | PE (A) |
| | Sealant layer | | | | TUX MC-S | TUX MC-S | TUX MC-S | TUX MC-S |
| Thickness (µm) | Multilayer film | | Extruder 1 | Front layer | 0.3 | 0.3 | 6 | 6 |
| | | | Extruder 2 | First intermediate layer | 1 | 1 | 1 | 1 |
| | | | Extruder 3 | Second intermediate layer | 24 | 24 | 16 | 16 |
| | | | Extruder 4 | Third intermediate layer | 1 | 1 | 1 | 1 |
| | | | Extruder 5 | Back layer | 0.3 | 0.3 | 6 | 6 |
| | Sealant layer | | | | 60 | 60 | 100 | 120 |
| Heat-seal onset temperature (°C) | | | | Front layer of multilayer film | 160 | 220 | 160 | 220 |
| | | | | Sealant layer | 110 | 110 | 110 | 110 |
| | | | | Temperature difference | 50 | 110 | 50 | 110 |
| PE content in laminate (mass%) | | | | | 92.9 | 92.8 | 91.0 | 91.2 |
| Recyclability | | | | | A | A | A | A |
| Heat sealability | | Maximum temperature (°C) | | | 150 | 200 | 150 | 200 |
| | | Minimum temperature (°C) | | | 130 | 130 | 130 | 130 |
| | | Range of heat seal temperature condition | | | A | A | A | A |
| | | Appearance | | | B | A | B | A |

**[Table 5]**

| | | | | Example A2-1 | Example A2-2 | Example A2-3 | Example A2-4 | Example A2-5 |
|---|---|---|---|---|---|---|---|---|
| | Multilayer film | Extruder 1 | Front layer | PA (A) | PA (A) | PA (A) | PA (A) | PA (A) |
| | | Extruder 2 | First intermediate layer | Adhesive resin A | Adhesive resin A | Adhesive resin A | Adhesive resin A | Adhesive resin A |
| | | Extruder 3 | Second intermediate layer | PE (A) | PE (A) | PE (A) | PE (A) | PE (A) |
| Material | | Extruder 4 | Third intermediate layer | Adhesive resin A | Adhesive resin A | Adhesive resin A | Adhesive resin A | Adhesive resin A |
| | | Extruder 5 | Back layer | PE (A) | PE (A) | PE (A) | PE (A) | PE (A) |
| | Polyethylene film | Extruder 1 | Front layer | PE (C) | PE (B) | PE (D) | PE (B) | PE (D) |
| | | Extruder 2 | Intermediate layer | PE (C) | PE (A) | PE (E) | PE (C) | PE (D) |
| | | Extruder 3 | Back layer | PE (C) | PE (B) | PE (D) | PE (B):PE (C) =50:50 | PE (D) |
| | Sealant layer | | | TUX MC-S | TUX MC-S | TUX MC-S | TUX MC-S | TUX MC-S |
| | Multilayer film | Extruder 1 | Front layer | 2 | 2 | 2 | 2 | 2 |
| | | Extruder 2 | First intermediate layer | 1 | 1 | 1 | 1 | 1 |
| | | Extruder 3 | Second intermediate layer | 24 | 24 | 24 | 24 | 24 |
| Thickness (µm) | | Extruder 4 | Third intermediate layer | 1 | 1 | 1 | 1 | 1 |
| | | Extruder 5 | Back layer | 2 | 2 | 2 | 2 | 2 |
| | Polyethylene film | Extruder 1 | Front layer | 5 | 5 | 5 | 5 | 5 |
| | | Extruder 2 | Intermediate layer | 15 | 15 | 15 | 15 | 15 |
| | | Extruder 3 | Back layer | 5 | 5 | 5 | 5 | 5 |
| | Sealant layer | | | 80 | 80 | 80 | 80 | 80 |

**[Table 6]**

| | | | | | Example A2-1 | Example A2-2 | Example A2-3 | Example A2-4 | Example A2-5 |
|---|---|---|---|---|---|---|---|---|---|
| | Density (g/cm³) | | Extruder 1 | Front layer | 0.963 | 0.950 | 0.941 | 0.950 | 0.941 |
| | | | Extruder 2 | Intermediate layer | 0.963 | 0.958 | 0.962 | 0.963 | 0.941 |
| | | | Extruder 3 | Back layer | 0.963 | 0.950 | 0.941 | 0.957 | 0.941 |
| | | | Entire polyethylene film | | 0.963 | 0.955 | 0.954 | 0.959 | 0.941 |
| Polyethylene film | Gas barrier layer | | Inorganic oxide layer | | Silicon oxide | Silicon oxide | Silicon oxide | Silicon oxide | Silicon oxide |
| | | | Gas barrier coating layer | | Present | Present | Present | Present | Present |
| | Order of probe descending temperatures | | | | Intermediate | Intermediate | Intermediate | Intermediate | Intermediate |
| | | | | | layer = front | layer > front | layer > front | layer > back | layer = back |
| | | | | | layer = back layer | layer = back layer | layer = back layer | layer > front layer | layer = front layer |
| | Molecular orientation degree | | | | 1.04 | 1.06 | 1.05 | 1.06 | 1.06 |
| Heat-seal onset temperature (°C) | | Front layer of multilayer film | | | 220 | 220 | 220 | 220 | 220 |
| | | Sealant layer | | | 110 | 110 | 110 | 110 | 110 |
| | | Onset temperature difference | | | 110 | 110 | 110 | 110 | 110 |
| PE content in laminate (mass%) | | | | | 91.1 | 91.1 | 91.1 | 91.1 | 91.1 |
| Recyclability | | | | | A | A | A | A | A |
| Heat sealability | Maximum temperature (°C) | | | | 200 | 200 | 200 | 200 | 200 |
| | Minimum temperature (°C) | | | | 130 | 130 | 130 | 130 | 130 |
| | Range of heat seal temperature condition | | | | A | A | A | A | A |
| | Appearance | | | | A | A | A | A | A |
| Barrier processing suitability | | | | | A | A | A | A | C |
| Gas barrier properties | | Without boiling | | | B | A | A | A | B |
| | | With boiling | | | B | A | A | A | A |
| Adhesion strength | | | Normal state | | A | A | A | A | A |
| | | | Wet | | A | A | A | A | A |

**[Table 7]**

| | | | | Example A2-6 | Example A2-7 | Example A2-8 | Example A2-9 | Example A2-10 | Example A2-11 |
|---|---|---|---|---|---|---|---|---|---|
| | Multilayer film | Extruder 1 | Front layer | PA (A) | PA (A) | PA (A) | PA (A) | PA (A) | PA (A) |
| | | Extruder 2 | First intermediate layer | Adhesive resin A | Adhesive resin A | Adhesive resin A | Adhesive resin A | Adhesive resin A | Adhesive resin A |
| | | Extruder 3 | Second intermediate layer | PE (A) | PE (A) | PE (A) | PE (A) | PE (A) | PE (A) |
| Material | | Extruder 4 | Third intermediate layer | Adhesive resin A | Adhesive resin A | Adhesive resin A | Adhesive resin A | Adhesive resin A | Adhesive resin A |
| | | Extruder 5 | Back layer | PE (A) | PE (A) | PE (A) | PE (A) | PE (A) | PE (A) |
| | Polyethylene film | Extruder 1 | Front layer | PE (F) | PE (B) | PE (B) | PE (B) | PE (B) | PE (B) |
| | | Extruder 2 | Intermediate layer | PE (E) | PE (A) | PE (A) | PE (A) | PE (A) | PE (A) |
| | | Extruder 3 | Back layer | PE (F) | PE (B) | PE (B) | PE (B) | PE (B) | PE (B) |
| | Sealant layer | | | TUX MC-S | TUX MC-S | TUX MC-S | TUX HC | TUX TC-S | TUX VCS |
| | Multilayer film | Extruder 1 | Front layer | 2 | 2 | 2 | 2 | 2 | 2 |
| | | Extruder 2 | First intermediate layer | 1 | 1 | 1 | 1 | 1 | 1 |
| | | Extruder 3 | Second intermediate layer | 24 | 24 | 24 | 24 | 24 | 24 |
| Thickness (µm) | | Extruder 4 | Third intermediate layer | 1 | 1 | 1 | 1 | 1 | 1 |
| | | Extruder 5 | Back layer | 2 | 2 | 2 | 2 | 2 | 2 |
| | Polyethylene film | Extruder 1 | Front layer | 5 | 5 | 5 | 5 | 5 | 5 |
| | | Extruder 2 | Intermediate layer | 15 | 15 | 15 | 15 | 15 | 15 |
| | | Extruder 3 | Back layer | 5 | 5 | 5 | 5 | 5 | 5 |
| | Sealant layer | | | 80 | 80 | 80 | 80 | 80 | 80 |

**[Table 8]**

| | | | | | | | Example A2-6 | Example A2-7 | Example A2-8 | Example A2-9 | Example A2-10 | Example A2-11 |
|---|---|---|---|---|---|---|---|---|---|---|---|---|
| | Density (g/cm³) | | | | Extruder 1 | Front layer | 0.920 | 0.950 | 0.950 | 0.950 | 0.950 | 0.950 |
| | | | | | Extruder 2 | Intermediate layer | 0.962 | 0.958 | 0.958 | 0.958 | 0.958 | 0.958 |
| | | | | | Extruder 3 | Back layer | 0.920 | 0.950 | 0.950 | 0.950 | 0.950 | 0.950 |
| | | | | | Entire base material | | 0.945 | 0.955 | 0.955 | 0.955 | 0.955 | 0.955 |
| Polyethylene film | Gas barrier layer | | | | Inorganic oxide layer | | Silicon oxide | Silicon oxide | Aluminum oxide | Silicon oxide | Silicon oxide | Silicon oxide |
| | | | | | Gas barrier coating laver | | Present | Present | Present | Present | Present | Present |
| | Order of probe descending temperatures | | | | | | Intermediate | Intermediate | Intermediate | Intermediate | Intermediate | Intermediate |
| | | | | | | | layer = back | layer > front | layer > front | layer > front | layer > front | layer > front |
| | | | | | | | layer = front layer | layer = back layer | layer = back layer | layer = back layer | layer = back layer | layer = back layer |
| | Molecular orientation degree | | | | | | 1.06 | 1.15 | 1.06 | 1.06 | 1.15 | 1.15 |
| Heat-seal onset temperature (°C) | | Front layer of multilayer film | | | | | 220 | 220 | 220 | 220 | 220 | 220 |
| | | Sealant layer | | | | | 110 | 110 | 110 | 120 | 100 | 90 |
| | | Onset temperature difference | | | | | 110 | 110 | 110 | 100 | 120 | 130 |
| PE content in laminate (mass%) | | | | | | | 91.0 | 91.1 | 91.1 | 91.1 | 91.1 | 91.1 |
| Recyclability | | | | | | | A | A | A | A | A | A |
| Heat sealability | | | Maximum temperature (°C) | | | | 200 | 200 | 200 | 200 | 200 | 200 |
| | | | Minimum temperature (°C) | | | | 130 | 130 | 130 | 140 | 130 | 120 |
| | | | Range of heat seal temperature condition | | | | A | A | A | A | A | A |
| | | | Appearance | | | | A | A | A | A | A | A |
| Barrier processing suitability | | | | | | | B | A | A | A | A | A |
| Gas barrier properties | | | | Without boiling | | | B | A | A | A | A | A |
| | | | | With boiling | | | A | A | A | A | B | D |
| Adhesion strength | | | | | Normal state | | A | A | A | A | A | A |
| | | | | | Wet | | A | A | A | A | A | A |

**[Table 9]**

| | | | | | Comparative Example A1-1 | Comparative Example A1-2 | Comparative Example A1-3 |
|---|---|---|---|---|---|---|---|
| Material | Multilayer film | | | Extruder 1 | PE (A) | PE (A) | PP (A) |
| | | | | Extruder 2 | PE (A) | PE (A) | Adhesive resin A |
| | | | | Extruder 3 | PE (A) | PE (A) | PE (A) |
| | | | | Extruder 4 | PE (A) | PE (A) | Adhesive resin A |
| | | | | Extruder 5 | PE (A) | PE (A) | PE (A) |
| | Sealant layer | | | | TUX MC-S | TUX VCS | TUX MC-S |
| Thickness (µm) | | Multilayer film | | Extruder 1 | 2 | 2 | 0.2 |
| | | | | Extruder 2 | 1 | 1 | 1 |
| | | | | Extruder 3 | 24 | 24 | 24 |
| | | | | Extruder 4 | 1 | 1 | 1 |
| | | | | Extruder 5 | 2 | 2 | 0.2 |
| | | Sealant layer | | | 60 | 60 | 60 |
| Heat-seal onset temperature (°C) | | | Front layer of multilayer film | | 140 | 140 | 160 |
| | | | Sealant layer | | 110 | 100 | 110 |
| | | | Onset temperature difference | | 30 | 40 | 50 |
| PE content in laminate (mass%) | | | | | 95.5 | 95.5 | 93.0 |
| Recyclability | | | | | A | A | A |
| Heat sealability | | | Maximum temperature (°C) | | 130 | 130 | 140 |
| | | | Minimum temperature (°C) | | 130 | 120 | 130 |
| | | | Range of heat seal temperature condition | | B | B | B |
| | | | Appearance | | C | C | C |

### {Second Examination}

### [Material]

The same materials as in the first examination were prepared.

### [Production of Coextruded Multilayer Film]

### <Examples B1-1 to B1-28, Examples B2-1 to B2-21, and Comparative Examples B1 to B4>

A coextruded multilayer film was produced by a coextrusion air cooling inflation method. Specifically, first, extruders 1 to 5 were prepared. Each extruder was filled with the materials shown in Tables 10 to 15, 17, 19, 21, and 23, respectively. When the two materials were mixed and used, the names of the materials and the mixing ratios (mass ratios) thereof are shown in the tables. The filled material was melt-kneaded (temperature: 190 to 230°C). Molten materials were extruded from each extruder, laminated, and air-cooled to produce a coextruded multilayer film. The material for each extruder was extruded so that the thickness was the value shown in Tables 10 to 15, 17, 19, 21, and 23. As shown in the tables, some coextruded multilayer films were subjected to a stretching treatment at a magnification of 2 to 5 in an MD direction.

### [Production of Polyethylene Film]

### <Examples B2-1 to B2-21>

A coextruded multilayer film was produced by a coextrusion air cooling inflation method. Specifically, first, extruders 1 to 3 were prepared. Each extruder was filled with the materials shown in Tables 15, 17, 19, and 21, respectively. The filled material was melt-kneaded (temperature: 190 to 230°C). Molten materials were extruded from each extruder, laminated, and air-cooled to obtain a polyethylene film. A surface of the obtained polyethylene film was subjected to a corona treatment. The polyethylene films of Examples B2-7 and B2-18 were subjected to a stretching treatment at a magnification of 2 to 5 in an MD direction.

### [Production of Laminate]

### <Examples B1-1 to 1-28 and Comparative Examples B1 to B4>

A surface on a back layer of the coextruded multilayer film and a sealant layer were bonded by a dry lamination method using an adhesive A and aged (temperature: 40°C, duration: 4 days) to obtain a laminate. A thickness of the adhesive layer was 3 µm. For the sealant layer, the materials shown in Tables 10 to 14 and 23 were used.

### <Examples B2-1 to B2-21>

A laminate was obtained in the same manner as that of Example A2-1 of the first examination described above except that the coextruded multilayer film according to each of Examples B2-1 to B2-21 was used, and the sealant layer shown in the table was used.

### [Evaluation of Laminate]

The laminate obtained in each example was evaluated as follows. The results were shown in the tables. The recyclability, the heat sealability, the heat-seal onset temperature, the barrier processing suitability, the evaluation of the gas barrier properties, the molecular orientation degree, and the probe descending temperature were measured in the same manner as in the first examination described above.

### <Evaluation of Curl>

The produced coextruded multilayer film was cut into a size of 200 mm in a TD direction and 200 mm in an MD direction and left to stand on a horizontal plane, and curl was observed from the horizontal plane to four corners of the coextruded multilayer film. The degree of curling was evaluated according to the following criteria.

### (Reference)

A: No curl is observed in the coextruded multilayer film.
B: Slight curl is observed in the coextruded multilayer film.
C: The coextruded multilayer film is rounded.

### <Adhesion Strength>

### (Adhesion Strength 1)

A strip-shaped test piece having a width of 15 mm was cut out from the laminate obtained in each of Examples and Comparative Examples. Using a Tensilon universal tester RTC-1250 manufactured by ORIENTEC CO., LTD., the coextruded multilayer film and the sealant layer were peeled off from the end of the test piece, and the adhesion strength between the layers was measured. The measurement was performed under conditions of T-shaped peeling and a peeling rate of 300 mm/min in a normal state (temperature: 23°C, humidity: 50%RH). **In** addition, the peeling was performed under a condition of a peeling rate of 300 mm/min in a wet state (temperature: 23°C, humidity: 50%RH) in which the peeling interface was peeled while being wetted with water.

### (Adhesion Strength 2)

A test piece was cut out in the same manner as in Adhesion Strength 1. The coextruded multilayer film and the polyethylene film were peeled off from each other under the same conditions as in Adhesion Strength 1, and the adhesion strength between the layers was measured. **In** addition, the adhesion strength was measured in the same manner in a wet state.

### (Adhesion Strength 3)

A test piece was cut out in the same manner as in Adhesion Strength 1. The polyethylene film and the heat seal layer were peeled off from each other under the same conditions as in Adhesion Strength 1, and the adhesion strength between the layers was measured. In addition, the adhesion strength was measured in the same manner in a wet state. The results were evaluated according to the following criteria.

### (Normal State Criteria)

A: 2 N/15 mm or more
B: Less than 2 N/15 mm

### (Wet State Criteria)

A: 2 N/15 mm or more
B: Less than 2 N/15 mm

**[Table 10]**

| | | | | | Example B1-1 | Example B 1-2 | Example B 1-3 | Example B1-4 | Example B 1-5 | Example B1-6 |
|---|---|---|---|---|---|---|---|---|---|---|
| Material | Multilayer film | Extruder 1 | Front layer | | PP (A) | PBT (A) | PA (A) | EVOH (A) | PBT (A) | PA (A) |
| | | Extruder 2 | First intermediate layer | | Adhesive resin A | Adhesive resin A | Adhesive resin A | Adhesive resin A | Adhesive resin A | Adhesive resin A |
| | | Extruder 3 | Second intermediate layer | | PE (A) | PE (A) | PE (A) | PE (A) | PE (A) | PE (A) |
| | | Extruder 4 | Third intermediate layer | | Adhesive resin A | Adhesive resin A | Adhesive resin A | Adhesive resin A | Adhesive resin A | Adhesive resin A |
| | | Extruder 5 | Back layer | | PP (A) | PBT (A) | PA (A) | EVOH (A) | PA (A) | PP (A) |
| | Sealant layer | | | | TUX MC-S | TUX MC-S | TUX MC-S | TUX MC-S | TUX MC-S | TUX MC-S |
| Thickness (µm) | Multilayer film | Extruder 1 | Front layer | | 1 | 1 | 1 | 1 | 1 | 1 |
| | | Extruder 2 | First intermediate layer | | 1 | 1 | 1 | 1 | 1 | 1 |
| | | Extruder 3 | Second intermediate layer | | 24 | 24 | 24 | 24 | 24 | 24 |
| | | Extruder 4 | Third intermediate layer | | 1 | 1 | 1 | 1 | 1 | 1 |
| | | Extruder 5 | Back layer | | 1 | 1 | 1 | 1 | 1 | 1 |
| | Sealant layer | | | | 60 | 60 | 60 | 60 | 60 | 60 |
| Multilayer film stretching process | | | | | Unstretched | Unstretched | Unstretched | Unstretched | Unstretched | Unstretched |
| Heat-seal onset temperature (°C) | | | Front layer of multilayer film | | 160 | 230 | 220 | 190 | 230 | 220 |
| | | | Sealant layer | | 110 | 110 | 110 | 110 | 110 | 110 |
| | | | Temperature difference | | 50 | 120 | 110 | 80 | 120 | 110 |
| PE content in laminate (mass%) | | | | | 91.2 | 90.2 | 90.7 | 90.6 | 90.4 | 90.9 |
| Recyclability | | | | | A | A | A | A | A | A |
| Heat sealability | | Maximum temperature(°C) | | | 150 | > 200 | 200 | 170 | > 200 | 200 |
| | | Minimum temperature (°C) | | | 130 | 130 | 130 | 130 | 130 | 130 |
| | | Range of heat seal temperature condition | | | A | A | A | A | A | A |
| | | Appearance | | | A | A | A | A | A | A |
| Adhesion strength 1 (N/15 mm) | | | | Normal state | 2.4 | 2.6 | >10 | > 10 | 2.6 | 2.3 |
| | | | | Wet | 2.2 | 2.2 | 2.2 | > 10 | 2.3 | 2.1 |
| Curling | | | | | A | A | A | A | B | B |

**[Table 11]**

| | | | | | | Example B1-7 | Example B1-8 | Example B1-9 | Example B1-10 | Example B1-11 | Example B1-12 |
|---|---|---|---|---|---|---|---|---|---|---|---|
| Material | Multilayer film | | Extruder 1 | | Front layer | PA (A) | PP (A) | PE (A):PP (A) = 90:10 | PE (A):PP (A) = 90:10 | PA (A):PE (A) = 90: 10 | PP (A) |
| | | | Extruder 2 | | First intermediate layer | Adhesive resin A | PE (A) | PE (A) | PE (A) | PE (A) | Adhesive resin A |
| | | | Extruder 3 | | Second intermediate layer | PE (A) | PE (A) | PE (A) | PE (A) | PE (A) | PE (A) |
| | | | Extruder 4 | | Third intermediate layer | Adhesive resin A | PE (A) | PE (A) | PE (A) | PE (A) | Adhesive resin A |
| | | | Extruder 5 | | Back layer | EVOH (A) | PP (A) | PE (A):PP (A) = 90:10 | PE (A):PP (A) = 90: 10 | PA (A):PE (A) = 90: 10 | PP (A) |
| | Sealant layer | | | | | TUX MC-S | TUX MC-S | TUX MC-S | TUX VCS | TUX MC-S | TUX MC-S |
| Thickness (µm) | Multilayer film | | Extruder 1 | | Front layer | 1 | 1 | 1 | 1 | 1 | 0.3 |
| | | | Extruder 2 | | First intermediate layer | 1 | 1 | 1 | 1 | 1 | 1 |
| | | | Extruder 3 | | Second intermediate layer | 24 | 24 | 24 | 24 | 24 | 24 |
| | | | Extruder 4 | | Third intermediate layer | 1 | 1 | 1 | 1 | 1 | 1 |
| | | | Extruder 5 | | Back layer | 1 | 1 | 1 | 1 | 1 | 0.3 |
| | Sealant layer | | | | | 60 | 60 | 60 | 60 | 60 | 60 |
| Multilayer film stretching process | | | | | | Unstretched | Unstretched | Unstretched | Unstretched | Unstretched | Unstretched |
| Heat-seal onset temperature (°C) | | | Front layer of multilayer film | | | 220 | 160 | 140 | 140 | 200 | 160 |
| | | | Sealant layer | | | 110 | 110 | 110 | 90 | 110 | 110 |
| | | | Temperature difference | | | 110 | 50 | 30 | 50 | 90 | 50 |
| PE content in laminate (mass%) | | | | | | 90.6 | 93.3 | 95.2 | 95.2 | 93.0 | 92.6 |
| Recyclability | | | | | | A | A | A | A | A | A |
| Heat sealability | | Maximum temperature (°C) | | | | 200 | 150 | 130 | 130 | 190 | 150 |
| | | Minimum temperature (°C) | | | | 130 | 130 | 130 | 110 | 130 | 130 |
| | | Range of heat seal temperature condition | | | | A | A | B | A | A | A |
| | | Appearance | | | | A | A | A | A | A | B |
| Adhesion strength 1 (N/15 mm) | | | | Normal state | | > 10 | 2.7 | 8.8 | 9.0 | > 10 | 2.5 |
| | | | | Wet | | > 10 | 2.3 | 7.9 | 8.5 | 5.4 | 2.4 |
| Curling | | | | | | B | A | A | A | A | A |

**[Table 12]**

| | | | | | | | Example B1-13 | Example B1-14 | Example B1-15 | Example B1-16 | Example B1-17 | Example B1-18 |
|---|---|---|---|---|---|---|---|---|---|---|---|---|
| Material | Multilayer film | | Extruder 1 | | | Front layer | PA (A) | PP (A) | PP (A) | PBT (A) | PA (A) | EVOH (A) |
| | | | Extruder 2 | | | First intermediate layer | Adhesive resin A | Adhesive resin A | Adhesive resin A | Adhesive resin A | Adhesive resin A | Adhesive resin A |
| | | | Extruder 3 | | | Second intermediate layer | PE (A) | PE (A) | PE (A) | PE (A) | PE (A) | PE (A) |
| | | | Extruder 4 | | | Third intermediate layer | Adhesive resin A | Adhesive resin A | Adhesive resin A | Adhesive resin A | Adhesive resin A | Adhesive resin A |
| | | | Extruder 5 | | | Back layer | PA (A) | PP (A) | PP (A) | PBT (A) | PA (A) | EVOH (A) |
| | Sealant layer | | | | | | TUX MC-S | TUX MC-S | TUX MC-S | TUX MC-S | TUX MC-S | TUX MC-S |
| Thickness (µm) | Multilayer film | | Extruder 1 | | | Front layer | 0.3 | 10 | 1 | 1 | 1 | 1 |
| | | | Extruder 2 | | | First intermediate layer | 1 | 1 | 1 | 1 | 1 | 1 |
| | | | Extruder 3 | | | Second intermediate layer | 24 | 10 | 24 | 24 | 24 | 24 |
| | | | Extruder 4 | | | Third intermediate layer | 1 | 1 | 1 | 1 | 1 | 1 |
| | | | Extruder 5 | | | Back layer | 0.3 | 5 | 1 | 1 | 1 | 1 |
| | Sealant layer | | | | | | 60 | 60 | 60 | 60 | 60 | 60 |
| Multilayer film stretching process | | | | | | | Unstretched | Unstretched | Stretched | Stretched | Stretched | Stretched |
| Heat-seal onset temperature (°C) | | | | Front layer of multilayer film | | | 220 | 160 | 160 | 230 | 220 | 190 |
| | | | | Sealant layer | | | 110 | 110 | 110 | 110 | 110 | 110 |
| | | | | Temperature difference | | | 110 | 50 | 50 | 120 | 110 | 80 |
| PE content in laminate (mass%) | | | | | | | 92.4 | 90.9 | 91.2 | 90.2 | 90.7 | 90.6 |
| Recyclability | | | | | | | A | A | A | A | A | A |
| Heat sealability | | Maximum temperature (°C) | | | | | 200 | 150 | 150 | > 200 | 200 | 170 |
| | | Minimum temperature(°C) | | | | | 130 | 130 | 130 | 130 | 130 | 130 |
| | | Range of heat seal temperature condition | | | | | A | A | A | A | A | A |
| | | Appearance | | | | | A | A | A | A | A | A |
| Adhesion strength 1 (N/15 mm) | | | | | Normal state | | > 10 | 2.2 | 2.8 | 3.6 | > 10 | > 10 |
| | | | | | Wet | | 2.5 | 2.0 | 2.5 | 2.3 | 2.3 | > 10 |
| Curling | | | | | | | A | A | A | A | A | A |

**[Table 13]**

| | | | | | | Example B1-19 | Example B1-20 | Example B1-21 | Example B1-22 | Example B1-23 | Example B1-24 |
|---|---|---|---|---|---|---|---|---|---|---|---|
| Material | Multilayer film | | Extruder 1 | | Front layer | PBT (A) | PA (A) | PA (A) | PP (A) | PE (A):PP (A) = 90:10 | PE (A):PP (A) = 90:10 |
| | | | Extruder 2 | | First intermediate layer | Adhesive resin A | Adhesive resin A | Adhesive resin A | PE (A) | PE (A) | PE (A) |
| | | | Extruder 3 | | Second intermediate layer | PE (A) | PE (A) | PE (A) | PE (A) | PE (A) | PE (A) |
| | | | Extruder 4 | | Third intermediate layer | Adhesive resin A | Adhesive resin A | Adhesive resin A | PE (A) | PE (A) | PE (A) |
| | | | Extruder 5 | | Back layer | PA (A) | PP (A) | EVOH (A) | PP (A) | PE (A):PP (A) = 90:10 | PE (A):PP (A) = 90:10 |
| | Sealant layer | | | | | TUX MC-S | TUX MC-S | TUX MC-S | TUX MC-S | TUX MC-S | TUX VCS |
| Thickness (µm) | Multilayer film | | Extruder 1 | | Front layer | 1 | 1 | 1 | 1 | 1 | 1 |
| | | | Extruder 2 | | First intermediate layer | 1 | 1 | 1 | 1 | 1 | 1 |
| | | | Extruder 3 | | Second intermediate layer | 24 | 24 | 24 | 24 | 24 | 24 |
| | | | Extruder 4 | | Third intermediate layer | 1 | 1 | 1 | 1 | 1 | 1 |
| | | | Extruder 5 | | Back layer | 1 | 1 | 1 | 1 | 1 | 1 |
| | Sealant layer | | | | | 60 | 60 | 60 | 60 | 60 | 60 |
| Multilayer film stretching process | | | | | | Stretched | Stretched | Stretched | Stretched | Stretched | Stretched |
| Heat-seal onset temperature (°C) | | | | Front layer of multilayer film | | 230 | 220 | 220 | 160 | 140 | 140 |
| | | | | Sealant layer | | 110 | 110 | 110 | 110 | 110 | 90 |
| | | | | Temperature difference | | 120 | 110 | 110 | 50 | 30 | 50 |
| PE content in laminate (mass%) | | | | | | 90.4 | 90.9 | 90.6 | 93.3 | 95.2 | 95.2 |
| Recyclability | | | | | | A | A | A | A | A | A |
| Heat sealability | | Maximum temperature (°C) | | | | > 200 | 200 | 200 | 150 | 130 | 130 |
| | | Minimum temperature (°C) | | | | 130 | 130 | 130 | 130 | 130 | 110 |
| | | Range of heat seal temperature condition | | | | A | A | A | A | B | A |
| | | Appearance | | | | A | A | A | A | A | A |
| Adhesion strength 1 (N/15 mm) | | | | Normal state | | 3.3 | 2.5 | > 10 | 3.2 | 3.4 | 2.3 |
| | | | | Wet | | 2.5 | 2.4 | > 10 | 2.3 | 2.6 | 2.0 |
| Curling | | | | | | B | B | B | A | A | A |

**[Table 14]**

| | | | | | | Example B1-25 | Example B1-26 | Example B1-27 | Example B1-28 |
|---|---|---|---|---|---|---|---|---|---|
| Material | Multilayer film | | Extruder 1 | | Front layer | PA(A):PE (A) = 90: 10 | PP (A) | PA (A) | PP (A) |
| | | | Extruder 2 | | First intermediate layer | PE (A) | Adhesive resin A | Adhesive resin A | Adhesive resin A |
| | | | Extruder 3 | | Second intermediate layer | PE (A) | PE (A) | PE (A) | PE (A) |
| | | | Extruder 4 | | Third intermediate layer | PE (A) | Adhesive resin A | Adhesive resin A | Adhesive resin A |
| | | | Extruder 5 | | Back layer | PA(A):PE (A) = 90: 10 | PP (A) | PA (A) | PP (A) |
| | Sealant layer | | | | | TUX MC-S | TUX MC-S | TUX MC-S | TUX MC-S |
| Thickness (µm) | Multilayer film | | Extruder 1 | | Front layer | 1 | 0.3 | 0.3 | 10 |
| | | | Extruder 2 | | First intermediate layer | 1 | 1 | 1 | 1 |
| | | | Extruder 3 | | Second intermediate layer | 24 | 24 | 24 | 10 |
| | | | Extruder 4 | | Third intermediate layer | 1 | 1 | 1 | 1 |
| | | | Extruder 5 | | Back layer | 1 | 0.3 | 0.3 | 5 |
| | Sealant layer | | | | | 60 | 60 | 60 | 200 |
| Multilayer film stretching process | | | | | | Stretched | Stretched | Stretched | Stretched |
| Heat-seal onset temperature (°C) | | | | Front layer of multilayer film | | 200 | 160 | 220 | 160 |
| | | | | Sealant layer | | 110 | 110 | 110 | 110 |
| | | | | Temperature difference | | 90 | 50 | 110 | 50 |
| PE content in laminate (mass%) | | | | | | 93.0 | 92.6 | 92.4 | 90.9 |
| Recyclability | | | | | | A | A | A | A |
| Heat sealability | | Maximum temperature (°C) | | | | 190 | 150 | 200 | 150 |
| | | Minimum temperature (°C) | | | | 130 | 130 | 130 | 130 |
| | | Range of heat seal temperature condition | | | | A | A | A | A |
| | | Appearance | | | | A | A | A | A |
| Adhesion strength 1 (N/15 mm) | | | | Normal state | | > 10 | 2.7 | > 10 | 2.2 |
| | | | | Wet | | 4.5 | 2.2 | 2.6 | 2.1 |
| Curling | | | | | | A | A | A | A |

**[Table 15]**

| | | | | Example B2-1 | Example B2-2 | Example B2-3 | Example B2-4 | Example B2-5 | Example B2-6 |
|---|---|---|---|---|---|---|---|---|---|
| | Multilayer film | Extruder 1 | Front layer | PA | PA (A) | PA (A) | PA (A) | PA (A) | PA (A) |
| | | Extruder 2 | First intermediate layer | Adhesive resin A | Adhesive resin A | Adhesive resin A | Adhesive resin A | Adhesive resin A | Adhesive resin A |
| | | Extruder 3 | Second intermediate layer | PE (A) | PE (A) | PE (A) | PE (A) | PE (A) | PE (A) |
| | | Extruder 4 | Third intermediate layer | Adhesive resin A | Adhesive resin A | Adhesive resin A | Adhesive resin A | Adhesive resin A | Adhesive resin A |
| | | Extruder 5 | Back layer | PA (A) | PA (A) | PA (A) | PA (A) | PA (A) | PA (A) |
| Material | Polyethylene film | Extruder 1 | Front layer | PE (C) | PE (B) | PE (D) | PE (B) | PE (D) | PE (F) |
| | | Extruder 2 | Intermediate layer | PE (C) | PE (A) | PE (E) | PE (C) | PE (D) | PE (E) |
| | | Extruder 3 | Back layer | PE (C) | PE (B) | PE (D) | PE (B):PE (C) = 50:50 | PE (D) | PE (F) |
| | Sealant layer | | | TUX MC-S | TUX MC-S | TUX MC-S | TUX MC-S | TUX MC-S | TUX MC-S |
| | Multilayer film | Extruder 1 | Front layer | 1 | 1 | 1 | 1 | 1 | 1 |
| | | Extruder 2 | First intermediate layer | 1 | 1 | 1 | 1 | 1 | 1 |
| | | Extruder 3 | Second intermediate layer | 24 | 24 | 24 | 24 | 24 | 24 |
| | | Extruder 4 | Third intermediate layer | 1 | 1 | 1 | 1 | 1 | 1 |
| Thickness (µm) | | Extruder 5 | Back layer | 1 | 1 | 1 | 1 | 1 | 1 |
| | Polyethylene film | Extruder 1 | Front layer | 5 | 5 | 5 | 5 | 5 | 5 |
| | | Extruder 2 | Intermediate layer | 15 | 15 | 15 | 15 | 15 | 15 |
| | | Extruder 3 | Back layer | 5 | 5 | 5 | 5 | 5 | 5 |
| | Sealant layer | | | 80 | 80 | 80 | 80 | 80 | 80 |
| Multilayer film stretching process | | | | Unstretched | Unstretched | Unstretched | Unstretched | Unstretched | Unstretched |

**[Table 16]**

| | | | | | | Example B2-1 | Example B2-2 | Example B2-3 | Example B2-4 | Example B2-5 | Example B2-6 |
|---|---|---|---|---|---|---|---|---|---|---|---|
| | Density (g/cm³) | | | Extruder 1 | Front layer | 0.963 | 0.950 | 0.941 | 0.950 | 0.941 | 0.920 |
| | | | | Extruder 2 | Intermediate layer | 0.963 | 0.958 | 0.962 | 0.963 | 0.941 | 0.962 |
| | | | | Extruder 3 | Back layer | 0.963 | 0.950 | 0.941 | 0.957 | 0.941 | 0.920 |
| | | | | Entire polyethylene film | | 0.963 | 0.955 | 0.954 | 0.959 | 0.941 | 0.945 |
| Polyethylene film | Gas barrier layer | | | Inorganic oxide layer | | Silicon oxide | Silicon oxide | Silicon oxide | Silicon oxide | Silicon oxide | Silicon oxide |
| | | | | Gas barrier coating layer | | Present | Present | Present | Present | Present | Present |
| | Order of probe descending temperatures | | | | | Intermediate | Intermediate | Intermediate | Intermediate | Intermediate | Intermediate |
| | | | | | | layer = front | layer > front | layer > front | layer > back | layer = back | layer = back |
| | | | | | | layer = back | layer = back | layer = back | layer > front | layer = front | layer = front |
| | | | | | | layer | layer | layer | layer | layer | layer |
| | Molecular orientation degree | | | | | 1.04 | 1.06 | 1.05 | 1.06 | 1.06 | 1.06 |
| Heat-seal onset temperature (°C) | | | Front layer of multilayer film | | | 220 | 220 | 220 | 220 | 220 | 220 |
| | | | Sealant layer | | | 110 | 110 | 110 | 110 | 110 | 110 |
| | | | Onset temperature difference | | | 110 | 110 | 110 | 110 | 110 | 110 |
| PE content in laminate (mass%) | | | | | | 91.0 | 91.0 | 90.9 | 91.0 | 90.9 | 90.9 |
| Recyclability | | | | | | A | A | A | A | A | A |
| Heat sealability | | Maximum temperature (°C) | | | | 200 | 200 | 200 | 200 | 200 | 200 |
| | | Minimum temperature (°C) | | | | 130 | 130 | 130 | 130 | 130 | 130 |
| | | Range of heat seal temperature condition | | | | A | A | A | A | A | A |
| | | Appearance | | | | A | A | A | A | A | A |
| Adhesion strength 2 (N/15 mm) | | | | Normal state | | > 10 | > 10 | > 10 | > 10 | > 10 | > 10 |
| | | | | Wet | | 2.1 | 2.2 | 2.2 | 2.1 | 2.3 | 2.2 |
| Curling | | | | | | A | A | A | A | A | A |
| Barrier processing suitability | | | | | | A | A | A | A | C | B |
| Gas barrier properties | | | | Without boiling | | B | A | A | A | B | B |
| | | | | With boiling | | B | A | A | A | B | B |
| Adhesion strength 3 | | | | Normal state | | A | A | A | A | A | A |
| | | | | Wet | | A | A | A | A | A | A |

**[Table 17]**

| | | | | Example B2-7 | Example B2-8 | Example B2-9 | Example B2-10 | Example B2-11 | Example B2-12 | Example B2-13 |
|---|---|---|---|---|---|---|---|---|---|---|
| | Multilayer film | Extruder 1 | Front layer | PA (A) | PA (A) | PA (A) | PA (A) | PA (A) | PA(A) | PA (A) |
| | | Extruder 2 | First intermediate layer | Adhesive resin A | Adhesive resin A | Adhesive resin A | Adhesive resin A | Adhesive resin A | Adhesive resin A | Adhesive resin A |
| | | Extruder 3 | Second intermediate layer | PE (A) | PE (A) | PE (A) | PE (A) | PE (A) | PE (A) | PE (A) |
| | | Extruder 4 | Third intermediate layer | Adhesive resin A | Adhesive resin A | Adhesive resin A | Adhesive resin A | Adhesive resin A | Adhesive resin A | Adhesive resin A |
| Material | | Extruder 5 | Back layer | PA (A) | PA (A) | PA (A) | PA (A) | PA (A) | PA (A) | PA (A) |
| | Polyethylene film | Extruder 1 | Front layer | PE (B) | PE (B) | PE (F) | PE (F) | PE (F) | PE (C) | PE (B) |
| | | Extruder 2 | Intermediate layer | PE (A) | PE (A) | PE (E) | PE (E) | PE (E) | PE (C) | PE (A) |
| | | Extruder 3 | Back layer | PE (B) | PE (B) | PE (F) | PE (F) | PE (F) | PE (C) | PE (B) |
| | Sealant layer | | | TUX MC-S | TUX MC-S | TUX HC | TUX MC-S | TUX VCS | TUX MC-S | TUX MC-S |
| | Multilayer film | Extruder 1 | Front layer | 1 | 1 | 1 | 1 | 1 | 1 | 1 |
| | | Extruder 2 | First intermediate layer | 1 | 1 | 1 | 1 | 1 | 1 | 1 |
| | | Extruder 3 | Second intermediate layer | 24 | 24 | 24 | 24 | 24 | 24 | 24 |
| Thickness (µm) | | Extruder 4 | Third intermediate layer | 1 | 1 | 1 | 1 | 1 | 1 | 1 |
| | | Extruder 5 | Back layer | 1 | 1 | 1 | 1 | 1 | 1 | 1 |
| | Polyethylene film | Extruder 1 | Front layer | 5 | 5 | 5 | 5 | 5 | 5 | 5 |
| | | Extruder 2 | Intermediate layer | 15 | 15 | 15 | 15 | 15 | 15 | 15 |
| | | Extruder 3 | Back layer | 5 | 5 | 5 | 5 | 5 | 5 | 5 |
| | Sealant layer | | | 80 | 80 | 80 | 80 | 80 | 80 | 80 |
| Multilayer film stretching process | | | | Unstretched | Unstretched | Unstretched | Unstretched | Unstretched | Stretched | Stretched |

**[Table 18]**

| | | | | | | Example B2-7 | Example B2-8 | Example B2-9 | Example B2-10 | Example B2-11 | Example B2-12 | Example B2-13 |
|---|---|---|---|---|---|---|---|---|---|---|---|---|
| | Density (g/cm³) | | | Extruder 1 | Front layer | 0.950 | 0.950 | 0.950 | 0.950 | 0.950 | 0.963 | 0.950 |
| | | | | Extruder 2 | Intermediate layer | 0.958 | 0.958 | 0.958 | 0.958 | 0.958 | 0.963 | 0.958 |
| | | | | Extruder 3 | Back layer | 0.950 | 0.950 | 0.950 | 0.950 | 0.950 | 0.963 | 0.950 |
| | | | | Entire polyethylene film | | 0.955 | 0.955 | 0.955 | 0.955 | 0.955 | 0.963 | 0.955 |
| Polyethylene film | Gas barrier layer | | | Inorganic oxide layer | | Silicon oxide | Aluminum oxide | Silicon oxide | Silicon oxide | Silicon oxide | Silicon oxide | Silicon oxide |
| | | | | Gas barrier coating layer | | Present | Present | Present | Present | Present | Present | Present |
| | Order of probe descending temperatures | | | | | Intermediate | Intermediate | Intermediate | Intermediate | Intermediate | Intermediate | Intermediate |
| | | | | | | layer > front | layer > front | layer > front | layer > front | layer = back | layer = front | layer > front |
| | | | | | | layer = back | layer = back | layer = back | layer = back | layer = front | layer = back | layer = back |
| | | | | | | layer | layer | layer | layer | layer | layer | layer |
| | Molecular orientation degree | | | | | 1.30 | 1.06 | 1.06 | 1.30 | 1.06 | 1.04 | 1.06 |
| Heat-seal onset temperature (°C) | | | Front layer of multilayer film | | | 220 | 220 | 220 | 220 | 220 | 220 | 220 |
| | | | Sealant layer | | | 110 | 110 | 120 | 110 | 90 | 110 | 110 |
| | | | Onset temperature difference | | | 110 | 110 | 100 | 110 | 130 | 110 | 110 |
| PE content in laminate (mass%) | | | | | | 91.0 | 91.0 | 91.0 | 91.0 | 91.0 | 91.0 | 91.0 |
| Recyclability | | | | | | A | A | A | A | A | A | A |
| Heat sealability | | Maximum temperature (°C) | | | | 200 | 200 | 200 | 200 | 200 | 200 | 200 |
| | | Minimum temperature (°C) | | | | 130 | 130 | 130 | 130 | 130 | 130 | 130 |
| | | Range of heat seal temperature condition | | | | A | A | A | A | A | A | A |
| | | Appearance | | | | A | A | A | A | A | A | A |
| Adhesion strength 2 (N/15 mm) | | | | Normal state | | > 10 | > 10 | > 10 | > 10 | > 10 | > 10 | > 10 |
| | | | | Wet | | 2.0 | 2.0 | 2.2 | 2.0 | 2.2 | 2.1 | 2.4 |
| Curling | | | | | | A | A | A | A | A | A | A |
| Barrier processing suitability | | | | | | A | A | A | A | A | A | A |
| Gas barrier properties | | | | Without boiling | | A | A | A | A | A | B | A |
| | | | | With boiling | | A | A | A | B | D | B | A |
| Adhesion strength 3 | | | | Normal state | | C | C | A | A | A | A | A |
| | | | | Wet | | C | C | A | A | A | A | A |

**[Table 19]**

| | | | | Example B2-14 | Example B2-15 | Example B2-16 | Example B2-17 | Example B2-18 | Example B2-19 |
|---|---|---|---|---|---|---|---|---|---|
| | Multilayer film | Extruder 1 | Front layer | PA (A) | PA (A) | PA (A) | PA (A) | PA (A) | PA (A) |
| | | Extruder 2 | First intermediate layer | Adhesive resin A | Adhesive resin A | Adhesive resin A | Adhesive resin A | Adhesive resin A | Adhesive resin A |
| | | Extruder 3 | Second intermediate layer | PE (A) | PE (A) | PE (A) | PE (A) | PE (A) | PE (A) |
| | | Extruder 4 | Third intermediate layer | Adhesive resin A | Adhesive resin A | Adhesive resin A | Adhesive resin A | Adhesive resin A | Adhesive resin A |
| Material | | Extruder 5 | Back layer | PA (A) | PA (A) | PA (A) | PA (A) | PA (A) | PA (A) |
| | Polyethylene film | Extruder 1 | Front layer | PE (D) | PE (B) | PE (D) | PE (F) | PE (B) | PE (F) |
| | | Extruder 2 | Intermediate layer | PE (E) | PE (C) | PE (D) | PE (E) | PE (A) | PE (E) |
| | | Extruder 3 | Back layer | PE (D) | PE (B):PE (C) = 50:50 | PE (D) | PE (F) | PE (B) | PE (F) |
| | Sealant layer | | | TUX MC-S | TUX MC-S | TUX MC-S | TUX MC-S | TUX MC-S | TUX HC |
| | Multilayer film | Extruder 1 | Front layer | 1 | 1 | 1 | 1 | 1 | 1 |
| | | Extruder 2 | First intermediate layer | 1 | 1 | 1 | 1 | 1 | 1 |
| | | Extruder 3 | Second intermediate layer | 24 | 24 | 24 | 24 | 24 | 24 |
| | | Extruder 4 | Third intermediate layer | 1 | 1 | 1 | 1 | 1 | 1 |
| Thickness (µm) | | Extruder 5 | Back layer | 1 | 1 | 1 | 1 | 1 | 1 |
| | Polyethylene film | Extruder 1 | Front layer | 5 | 5 | 5 | 5 | 5 | 5 |
| | | Extruder 2 | Intermediate layer | 15 | 15 | 15 | 15 | 15 | 15 |
| | | Extruder 3 | Back layer | 5 | 5 | 5 | 5 | 5 | 5 |
| | Sealant layer | | | 80 | 80 | 80 | 80 | 80 | 80 |
| Multilayer film stretching process | | | | Stretched | Stretched | Stretched | Stretched | Stretched | Stretched |

**[Table 20]**

| | | | | | | Example B2-14 | Example B2-15 | Example B2-16 | Example B2-17 | Example B2-18 | Example B2-19 |
|---|---|---|---|---|---|---|---|---|---|---|---|
| | Density (g/cm³) | | Extruder 1 | | Front layer | 0.941 | 0.950 | 0.941 | 0.920 | 0.950 | 0.950 |
| | | | Extruder 2 | | Intermediate layer | 0.962 | 0.963 | 0.941 | 0.962 | 0.958 | 0.958 |
| | | | Extruder 3 | | Back layer | 0.941 | 0.957 | 0.941 | 0.920 | 0.950 | 0.950 |
| | | | Entire polyethylene film | | | 0.954 | 0.959 | 0.941 | 0.945 | 0.955 | 0.955 |
| | Gas barrier layer | | Inorganic oxide layer | | | Silicon oxide | Silicon oxide | Silicon oxide | Silicon oxide | Silicon oxide | Silicon oxide |
| Polyethylene film | | | Gas barrier coating layer | | | Present | Present | Present | Present | Present | Present |
| | Order of probe descending temperatures | | | | | Intermediate | Intermediate | Intermediate | Intermediate | Intermediate | Intermediate |
| | | | | | | layer > front | layer > back | layer = back | layer = back | layer > front | layer = back |
| | | | | | | layer = back | layer > front | layer = front | layer = front | layer = back | layer = front |
| | | | | | | layer | layer | layer | layer | layer | layer |
| | Molecular orientation degree | | | | | 1.05 | 1.06 | 1.06 | 1.06 | 1.30 | 1.06 |
| Heat-seal onset temperature (°C) | | | Front layer of multilayer film | | | 220 | 220 | 220 | 220 | 220 | 220 |
| | | | Sealant layer | | | 110 | 110 | 110 | 110 | 110 | 120 |
| | | | Onset temperature difference | | | 110 | 110 | 110 | 110 | 110 | 100 |
| PE content in laminate (mass%) | | | | | | 90.9 | 91.0 | 90.9 | 90.9 | 91.0 | 91.0 |
| Recyclability | | | | | | A | A | A | A | A | A |
| Heat sealability | | Maximum temperature (°C) | | | | 200 | 200 | 200 | 200 | 200 | 200 |
| | | Minimum temperature(°C) | | | | 130 | 130 | 130 | 130 | 130 | 140 |
| | | Range of heat seal temperature condition | | | | A | A | A | A | A | A |
| | | Appearance | | | | A | A | A | A | A | A |
| Adhesion strength 2 (N/15 mm) | | | | Normal state | | > 10 | > 10 | > 10 | > 10 | > 10 | > 10 |
| | | | | Wet | | 2.4 | 2.3 | 2.4 | 2.0 | 2.1 | 2.2 |
| Curling | | | | | | A | A | A | A | A | A |
| Barrier processing suitability | | | | | | A | A | C | B | A | A |
| Gas barrier properties | | | | Without boiling | | A | A | B | B | A | A |
| | | | | With boiling | | A | A | B | B | A | A |
| Adhesion strength 3 | | | | Normal state | | A | A | A | A | C | A |
| | | | | Wet | | A | A | A | A | C | A |

**[Table 21]**

| | | | | Example B2-20 | Example B2-21 |
|---|---|---|---|---|---|
| | Multilayer film | Extruder 1 | Front layer | PA (A) | PA (A) |
| | | Extruder 2 | First intermediate layer | Adhesive resin A | Adhesive resin A |
| | | Extruder 3 | Second intermediate layer | PE (A) | PE (A) |
| Material | | Extruder 4 | Third intermediate layer | Adhesive resin A | Adhesive resin A |
| | | Extruder 5 | Back layer | PA (A) | PA (A) |
| | Polyethylene film | Extruder 1 | Front layer | PE (F) | PE (F) |
| | | Extruder 2 | Intermediate layer | PE (E) | PE (E) |
| | | Extruder 3 | Back layer | PE (F) | PE (F) |
| | Sealant layer | | | TUX TC-S | TUX VCS |
| | Multilayer film | Extruder 1 | Front layer | 1 | 1 |
| | | Extruder 2 | First intermediate layer | 1 | 1 |
| | | Extruder 3 | Second intermediate layer | 24 | 24 |
| | | Extruder 4 | Third intermediate layer | 1 | 1 |
| Thickness (µm) | | Extruder 5 | Back layer | 1 | 1 |
| | Polyethylene film | Extruder 1 | Front layer | 5 | 5 |
| | | Extruder 2 | Intermediate layer | 15 | 15 |
| | | Extruder 3 | Back layer | 5 | 5 |
| | Sealant layer | | | 80 | 80 |
| Multilayer film stretching process | | | | Stretched | Stretched |

**[Table 22]**

| | | | | | | | Example B2-20 | Example B2-21 |
|---|---|---|---|---|---|---|---|---|
| Polyethylene film | Density (g/cm³) | | | Extruder 1 | | Front layer | 0.950 | 0.950 |
| | | | | Extruder 2 | | Intermediate layer | 0.958 | 0.958 |
| | | | | Extruder 3 | | Back layer | 0.950 | 0.950 |
| | | | | Entire polyethylene film | | | 0.955 | 0.955 |
| | Gas barrier layer | | | Inorganic oxide layer | | | Silicon oxide | Silicon oxide |
| | | | | Gas barrier coating layer | | | Present | Present |
| | Order of probe descending temperatures | | | | | | Intermediate layer = front layer = back layer | Intermediate layer = front layer = back layer |
| | Molecular orientation degree | | | | | | 1.06 | 1.06 |
| Heat-seal onset temperature (°C) | | | Front layer of multilayer film | | | | 220 | 220 |
| | | | Sealant layer | | | | 100 | 90 |
| | | | Onset temperature difference | | | | 120 | 130 |
| PE content in laminate (mass%) | | | | | | | 91.0 | 91.0 |
| Recyclability | | | | | | | A | A |
| Heat sealability | | Maximum temperature (°C) | | | | | 200 | 200 |
| | | Minimum temperature (°C) | | | | | 130 | 120 |
| | | Range of heat seal temperature condition | | | | | A | A |
| | | Appearance | | | | | A | A |
| Adhesion strength 2 (N/15 mm) | | | | | Normal state | | > 10 | > 10 |
| | | | | | Wet | | 2.2 | 2.3 |
| Curling | | | | | | | A | A |
| Barrier processing suitability | | | | | | | A | A |
| Gas barrier properties | | | | | Without boiling | | A | A |
| | | | | | With boiling | | B | D |
| Adhesion strength 3 | | | | | Normal state | | A | A |
| | | | | | Wet | | A | A |

**[Table 23]**

| | | | | | | | Comparative Example B1 | Comparative Example B2 | Comparative Example B3 | Comparative Example B4 |
|---|---|---|---|---|---|---|---|---|---|---|
| Material | Multilayer film | | Extruder 1 | | | Front layer | PE (A) | PE (A) | PA (A) | PP (A) |
| | | | Extruder 2 | | | First intermediate layer | PE (A) | PE (A) | PE (A) | Adhesive resin A |
| | | | Extruder 3 | | | Second intermediate layer | PE (A) | PE (A) | PE (A) | PE (A) |
| | | | Extruder 4 | | | Third intermediate layer | PE (A) | PE (A) | PE (A) | Adhesive resin A |
| | | | Extruder 5 | | | Back layer | PE (A) | PE (A) | PE (A) | PE (A) |
| | Sealant layer | | | | | | TUX MC-S | TUX VCS | TUX MC-S | TUX MC-S |
| Thickness (µm) | Multilayer film | | Extruder 1 | | | Front layer | 2 | 2 | 1 | 0.2 |
| | | | Extruder 2 | | | First intermediate layer | 1 | 1 | 1 | 1 |
| | | | Extruder 3 | | | Second intermediate layer | 24 | 24 | 24 | 24 |
| | | | Extruder 4 | | | Third intermediate layer | 1 | 1 | 1 | 1 |
| | | | Extruder 5 | | | Back layer | 2 | 2 | 1 | 0.2 |
| | Sealant layer | | | | | | 60 | 60 | 60 | 60 |
| Multilayer film stretching process | | | | | | | Unstretched | Unstretched | Stretched | Unstretched |
| Heat-seal onset temperature (°C) | | | | Front layer of multilayer film | | | 140 | 140 | 220 | 160 |
| | | | | Sealant layer | | | 110 | 100 | 110 | 110 |
| | | | | Temperature difference | | | 30 | 40 | 110 | 50 |
| PE content in laminate (mass%) | | | | | | | 97.0 | 97.0 | 90.7 | 94.4 |
| Recyclability | | | | | | | A | A | A | A |
| Heat sealability | | Maximum temperature (°C) | | | | | 130 | 130 | 200 | 140 |
| | | Minimum temperature (°C) | | | | | 130 | 120 | 130 | 130 |
| | | Range of heat seal temperature condition | | | | | B | B | A | B |
| | | Appearance | | | | | C | C | A | C |
| Adhesion strength 1 (N/15 mm) | | | | | Normal state | | > 10 | > 10 | 0.9 | > 10 |
| | | | | | Wet | | > 10 | > 10 | 0.7 | > 10 |
| Curling | | | | | | | A | A | C | B |

The gist of the present disclosure resides in the following [1] to [10].
[1] A coextruded multilayer film including a first layer and a second layer, in which the second layer includes a polyethylene resin,
   the first layer includes a resin having a melting point higher than that of the polyethylene resin, and
   a thickness of the first layer is 0.3 µm or more and 6 µm or less.
[2] The coextruded multilayer film according to [1], further including a third layer formed on a side of the second layer opposite to the first layer,
   in which the third layer includes a resin having a melting point higher than that of the polyethylene resin.
[3] A laminate including the coextruded multilayer film according to [1] or [2], a first adhesive layer provided on the second layer side of the coextruded multilayer film, and a sealant layer in this order,
   in which the sealant layer includes a polyethylene resin, and
   a content of the polyethylene resin in the laminate is 90 mass% or more based on a total amount of the laminate.
[4] The laminate according to [3], in which a difference between a heat-seal onset temperature of a front layer of the coextruded multilayer film and a heat-seal onset temperature of the sealant layer is 40°C or higher.
[5] The laminate according to [3] or [4], further including a polyethylene film and a second adhesive layer formed between the first adhesive layer and the sealant layer from the first adhesive layer side.
[6] The laminate according to [5], in which an absolute value of a molecular orientation degree of the polyethylene film is less than 1.07.
[7] The laminate according to [5] or [6], in which the polyethylene film includes a front layer, an intermediate layer, and a back layer in this order,
   in the polyethylene film, a probe descending temperature of the intermediate layer is higher than a probe descending temperature of the front layer and is equal to or higher than a probe descending temperature of the back layer, and
   the front layer of the polyethylene film includes a polyethylene resin having a density of 0.926 g/cm³ or more.
[8] The laminate according to any one of [4] to [7], further including a gas barrier layer formed between the coextruded multilayer film and the polyethylene film.
[9] The laminate according to any one of [5] to [7], further including a gas barrier layer formed between the polyethylene film and the sealant layer.
[10] A packaging bag formed using the laminate according to any one of [3] to [9].

### Reference Signs List

1,2, 3 Coextruded multilayer film
20 Polyethylene film
30 Sealant layer
40, 50 Adhesive layer
100, 200, 300, 400, 500, 600 Laminate

## Claims

1. A coextruded multilayer film comprising a first layer and a second layer,
wherein the second layer includes a polyethylene resin,
the first layer includes a resin having a melting point higher than that of the polyethylene resin, and
a thickness of the first layer is 0.3 µm or more and 6 µm or less.

2. The coextruded multilayer film according to claim 1, further comprising a third layer formed on a side of the second layer opposite to the first layer,
wherein the third layer includes a resin having a melting point higher than that of the polyethylene resin.

3. A laminate comprising the coextruded multilayer film according to claim 1 or 2, a first adhesive layer provided on the second layer side of the coextruded multilayer film, and a sealant layer in this order,
wherein the sealant layer includes a polyethylene resin, and
a content of the polyethylene resin in the laminate is 90 mass% or more based on a total amount of the laminate.

4. The laminate according to claim 3, wherein a difference between a heat-seal onset temperature of a front layer of the coextruded multilayer film and a heat-seal onset temperature of the sealant layer is 40°C or higher.

5. The laminate according to claim 4, further comprising a polyethylene film and a second adhesive layer formed between the first adhesive layer and the sealant layer from the first adhesive layer side.

6. The laminate according to claim 5, wherein an absolute value of a molecular orientation degree of the polyethylene film is less than 1.07.

7. The laminate according to claim 5 or 6, wherein
the polyethylene film includes a front layer, an intermediate layer, and a back layer in this order,
in the polyethylene film, a probe descending temperature of the intermediate layer is higher than a probe descending temperature of the front layer and is equal to or higher than a probe descending temperature of the back layer, and
the front layer of the polyethylene film includes a polyethylene resin having a density of 0.926 g/cm³ or more.

8. The laminate according to any one of claims 5 to 7, further comprising a gas barrier layer formed between the coextruded multilayer film and the polyethylene film.

9. The laminate according to any one of claims 5 to 8, further comprising a gas barrier layer formed between the polyethylene film and the sealant layer.

10. A packaging bag formed using the laminate according to any one of claims 3 to 9.
